(19) **Europäisches Patentamt**
**European Patent Office**
**Office européen des brevets**

(11) **EP 2 410 026 B1**

(12) **EUROPEAN PATENT SPECIFICATION**

(45) Date of publication and mention
of the grant of the patent:
**03.09.2014  Bulletin 2014/36**

(51) Int Cl.:
***C09D 11/00*** *(2014.01)*     ***B41J 2/01*** *(2006.01)*
***B41M 5/00*** *(2006.01)*

(21) Application number: **09768485.6**

(86) International application number:
**PCT/JP2009/055106**

(22) Date of filing: **17.03.2009**

(87) International publication number:
**WO 2010/106630 (23.09.2010 Gazette 2010/38)**

(54) **BLUE INK, INKJET RECORDING METHOD, RECORDING HEAD AND INKJET RECORDING DEVICE**

BLAUE TINTE, FARBSTRAHLAUFZEICHNUNGSVERFAHREN, AUFZEICHNUNGSKOPF UND FARBSTRAHLAUFZEICHNUNGSVORRICHTUNG

ENCRE BLEUE, PROCÉDÉ D'ENREGISTREMENT PAR JET D'ENCRE, TÊTE D'ENREGISTREMENT ET DISPOSITIF D'ENREGISTREMENT PAR JET D'ENCRE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**25.01.2012  Bulletin 2012/04**

(73) Proprietor: **Canon Kabushiki Kaisha**
**Tokyo 146-8501 (JP)**

(72) Inventors:
• **TAKANO, Aki**
**Tokyo 146-8501 (JP)**

• **SATO, Shin-ichi**
**Tokyo 146-8501 (JP)**

(74) Representative: **TBK**
**Bavariaring 4-6**
**80336 München (DE)**

(56) References cited:
**WO-A1-99/61534       JP-A- 8 218 020**
**JP-A- 2001 323 196    JP-A- 2007 016 225**
**JP-A- 2008 074 884    JP-A- 2008 074 885**
**JP-A- 2008 284 810**

**Description**

Technical Field

The present invention relates to a blue ink which can be preferably applied to ink jet recording systems, and an ink jet recording method, a recording head, and an ink jet recording apparatus which use the blue ink.

Background Art

In recent years, ink jet recording systems have been used in various applications, an example thereof is a mailing system. The mailing system is to record large amounts of indicia and the like on mails at high speed and is widely used not only in United States and Japan but also in European countries. Further, two-dimensional bar codes are becoming to be used for indicia and the like with recent computerization in the field of mailing. A two-dimensional bar code holds a large quantity of information in a narrow region at high density, and the information can be read with a simple apparatus. Therefore, use of two-dimensional bar codes can automate and labor-save the works of sorting mails and inputting data and can improve customer services, and further development is expected in future.

Inks used for an ink jet mailing system are required to record images with high water resistance in order to allow two-dimensional bar codes to be precisely read even when moisture of rainwater or sweat adheres to mails. Further, the color hue of recorded images is specified due to the designation by the post service authority and the customs of an area where mails distribute and in order to secure visibility of stamps. For example, a blue ink is used in French and German mailing systems.

There have been several proposals of inks suitable for recording black-and-white bar codes by the ink jet system. For example, there have been proposals of an ink containing an infrared fluorescent material and an ink containing a colorant which absorbs light in the wavelength region of 700 nm or more (refer to Patent Documents 1 to 3).

There has been also proposal of an ink containing a blue dye and a blue pigment as a blue ink capable of recording images with high water resistance (refer to Patent Document 4). Further, there have been proposals of inks containing a plurality of colorants as a blue ink capable of recording images with high visibility (refer to Patent Documents 5 and 6).

Prior Art Document

    Patent Document 1: Japanese Patent Laid-Open No. 8-183952
    Patent Document 2: Japanese Patent Laid-Open No. 9-59551
    Patent Document 3: Japanese Patent Laid-Open No. 10-46085
    Patent Document 4: Japanese Patent Laid-Open No. 8-218020
    Patent Document 5: Japanese Patent Laid-Open No. 2003-313480
    Patent Document 6: PCT Japanese Translation Patent Publication No. 2008-504400

Disclosure of Invention

Problems to be Solved by the Invention

However, as a result of research conducted by the inventors, it was found that although readability of black-and-white bar codes is satisfied by related art, readability of two-dimensional bar codes with blue ink cannot be satisfied. Further, it was found that the inks disclosed in Patent Documents 2 and 3 cannot satisfy high water resistance required for two-dimensional bar codes, and the inks disclosed in Patent Documents 1 to 4 have hues different from that required for inks for mailing systems and have insufficient visibility. Namely, any one of the conventional inks suitable for recording bar codes cannot satisfy all the performances required for a blue ink used for recording two-dimensional bar codes. Further, it was found that preservation stability of an ink cannot be achieved by some combinations of colorants to be contained in a blue ink.

Accordingly, an object of the present invention is to provide a blue ink having visibility required for two-dimensional bar codes used in a mailing system and being capable of recording two-dimensional bar codes with excellent readability and water resistance and satisfying preservation stability of ink. Another object of the present invention is to provide an ink jet recording method, a recording head, and an ink jet recording apparatus which use the blue ink.

Means for Solving the Problems

The above-described objects can be achieved by the invention described below. That is, a blue ink according to the present invention includes a dye and a pigment as colorants and is characterized by containing at least C. I. Direct Blue 199 and C. I. Food Black 2 as the dye and at least C. I. Pigment Blue 15:3 and C. I. Pigment Violet 23 as **the pigment, wherein the content $M_P$ (% by mass) of the pigment in the blue ink is 0.50 times or more to 0.70 times or less the content $M_D$ (% by mass) of the dye.**

**Advantages**

According to the present invention, it is possible to provide a blue ink having visibility required for two-dimensional bar codes used in a mailing system and being capable of recording two-dimensional bar codes with excellent readability and water resistance and satisfying preservation stability of ink. According to another embodiment of the present invention, it is possible to provide an ink jet recording method, a recording head, and an ink jet recording apparatus which use the blue ink.

Brief Description of Drawings

[Fig. 1] Fig. 1 is a perspective view showing a configuration of an ink jet recording apparatus.
[Fig. 2] Fig. 2 is a perspective view showing a configuration of a recording head.
[Fig. 3] Fig. 3 is a perspective view showing a configuration of a recording head.
[Fig. 4] Fig. 4 is an exploded perspective view of a recording unit.
[Fig. 5] Fig. 5 is an exploded perspective view of a recording unit.
[Fig. 6] Fig. 6 is an enlarged perspective view showing a recording element substrate.
[Fig. 7] Fig. 7 is a partially cut-away perspective view showing a recording element substrate.
[Fig. 8] Fig. 8 is a perspective view showing an ink storage unit.
[Fig. 9] Fig. 9 is a perspective view showing a joint rubber.

Best Mode for Carrying Out the Invention

The present invention is described in detail below by giving preferred embodiments. In the present invention, the color index number of a colorant is abbreviated as "C. I.".

First, the background up to the present invention is described. As a result of research conducted by the inventors, it was found that an optical density corresponding to a reading wavelength of a two-dimensional bar code recorded with a blue ink has a correlation with readability of the two-dimensional bar code. It was also found that in order to improve readability of a two-dimensional bar code, it is important to increase the optical density of a cyan component defined by the spectral sensitivity characteristic of ISO Status A. Therefore, as a result of search for a blue colorant capable of satisfying the above-described characteristics, the inventors found that C. I. Pigment Blue 15:3 is suitable as a pigment, and a two-dimensional bar code recorded with an ink containing the pigment has excellent water resistance.

However, as a result of research conducted by the inventors, the following was found. That is, the optical density of an image is increased by increasing the content of C. I. Pigment Blue 15:3 in an ink, thereby improving readability. However, when the content reaches a certain level, the optical density is not further increased, and a sufficient level of readability is not achieved. As a result of examination of the cause of this, it was found that the pigment is present in a dispersed state in an ink, and the pigment little extends on a recording medium when the ink is applied to the recording medium, thereby decreasing coverage of the recording medium with the colorant.

Therefore, as a result of research on a configuration of an ink capable of improving coverage of a recording medium, the inventors found that when an ink contains a dye soluble in an aqueous medium, running occurs when the ink is applied to a recording medium, thereby improving coverage. As a result of further research, it was found that with C. I. Direct Blue 199 among dyes, a two-dimensional bar code recorded with an ink containing the dye has relatively high water resistance, and the ink produces good running on a recording medium, thereby achieving a certain degree of optical density. However, C. I. Direct Blue 199 falls into the dye class having excellent water resistance, but a two-dimensional bar code recorded with an ink containing as a colorant only C. I. Direct Blue 199 does not have a sufficient level of water resistance.

As a result of further research on the basis of the above-described research results, the inventors found that an ink containing both C. I. Pigment Blue 15:3 and C. I. Direct Blue 199 produces an optical density higher than the level estimated from an ink containing singly each of the colorants. The inventors consider the reason for this as follows:

When an ink containing a pigment is applied to a recording medium, the pigment aggregates due to water evaporation and solid-liquid separation and is fixed on the recording medium. When a dye is present in ink, in this process, the dye functions as a salt to cause salting out, and thus the aggregation rate of the pigment is increased. Therefore, it is thought that the pigment easily remains near the surface of the recording medium, thereby particularly improving the optical density.

As described above, the optical density of an image can be increased by an ink containing, in addition to a pigment, a dye functioning as a salt. When a salt is present in an ink, salting out may occur in the ink, and thus it is more difficult to maintain a dispersed state of the pigment. Therefore, preservation stability of the ink tends to decrease. However, an ink containing both C. I. Pigment Blue 15:3 and C. I. Direct Blue 199 does not produce the salting out, and the ink has good preservation stability. The inventors consider the reason for this to be that both C. I. Pigment Blue 15:3 and C. I. Direct Blue 199 have a phthalocyanine skeleton, and molecules have high affinity. This mechanism can improve the optical density to some extent and can achieve a high level of preservation stability.

In addition, with respect to an ink used for a mailing system, the hue of a recorded image is specified from the viewpoint of designation by the post service authority and the customs of an area where mails distribute and securing visibility of indicia. Therefore, the inventors investigated that necessary visibility is satisfied by adjusting the hue of an image recorded with an ink. Specifically, the inventors investigated that a colorant other than C. I. Pigment Blue 15:3 and C. I. Direct Blue 199 is further added to an ink containing both colorants. As a result, it was found that the hue can be adjusted by using several red colorants, but the optical density of a cyan component is decreased by combining the red colorants. As a result of examination of the cause of such a phenomenon, the inventors found that the red colorants do not absorb light in a wavelength region of 600 to 720 nm in which the optical density of a cyan component is measured according to the spectral sensitivity characteristic of ISO Status A. Therefore, the inventors researched a colorant which does not decrease the optical density of a cyan component, and as a result, it was found that the hue can be particularly preferably adjusted by further adding as a pigment C. I. Pigment Violet 23 to the ink, and the optical density can be maintained.

As described above, readability of a two-dimensional bar code can be improved by increasing the optical density of a cyan component, but it was found that only the above-described three types of colorants are insufficient to record a two-dimensional bar code having blue as an ink hue and sufficient readability. Therefore, as a result of investigation, the inventors found that a black colorant is preferably added to the ink. A black colorant has the properties that it little affects the hue angle of an image because it has absorption over the entire visible wavelength region and a high optical density can be maintained because it also has absorption in the wavelength region of 600 to 720 nm in which the optical density of a cyan component is measured. In addition, the inventors further investigated the black colorant, resulting in the conclusion that it is necessary to further add C. I. Food Black 2 to the ink. By using the dye, it is possible to satisfy water resistance and improve the optical density of a cyan component to a level enough to achieve sufficient readability without deviating from a hue preferred for an image recorded with a blue ink used in a mailing system. Further, an ink containing C. I. Food Black 2 has excellent preservation stability as compared with inks containing other black dyes. The inventors consider the reason for this to be that C. I. Food Black 2 has a relatively smaller molecular weight and higher coloring strength than other black dyes, and thus the content in the ink can be decreased, resulting in a decrease in the total content of colorants in the ink.

The blue ink of the present invention contains the above-described four types of colorants, and it was found that combination of these colorants can produce images with water resistance higher than a level estimated from an ink containing each of the colorants singly. The inventors consider the reason for this to be that when moisture comes in contact with an image recorded with an ink containing the four types of colorants, the ratio of the colorants exposed to moisture is lower than that of an image recorded with an ink containing each of the colorants singly.

As described above, the blue ink of the present invention essentially contains C. I. Direct Blue 199 and C. I. Food Black 2 as dyes and C. I. Pigment Blue 15:3 and C. I. Pigment Violet 23 as pigments. The ink having such a configuration can provide visibility required for two-dimensional bar codes used in an ink jet mailing system, can record two-dimensional bar codes with excellent readability and water resistance, and can satisfy preservation stability of the ink.

<Blue ink>

Each of the components constituting the blue ink of the present invention is described in detail below.

(Colorant)

It is necessary that the blue ink of the present invention contains a dye and a pigment as colorants. It is also necessary that C. I. Direct Blue 199 and C. I. Food Black 2 are contained as dyes and C. I. Pigment Blue 15:3 and C. I. Pigment Violet 23 are contained as pigments. The blue ink of the present invention may contain a known colorant or a new synthesized colorant in addition to the specified colorants unless the advantage of the present invention is impaired.

In the present invention, the content (% by mass) of C. I. Direct Blue 199 in the blue ink is preferably 1.50% by mass or more to 4.00% by mass or less on the basis of the total mass of the ink. In addition, the content (% by mass) of C. I. Food Black 2 in the blue ink is preferably 0.50% by mass or more to 1.50% by mass or less on the basis of the total mass of the ink. In addition, the content (% by mass) of C. I. Pigment Blue 15:3 in the blue ink is preferably 0.50% by mass or more to 2.00% by mass or less on the basis of the total mass of the ink. In addition, the content (% by mass) of C. I. Pigment Violet 23 in the blue ink is preferably 0.50% by mass or more to 1.50% by mass or less on the basis of the total mass of the ink. In addition, the content $M_D$ (% by mass) of the dye in the blue ink is preferably 2.00% by mass or more to 6.00% by mass or less on the basis of the total mass of the ink. In addition, the content $M_P$ (% by mass) of the pigment in the blue ink is preferably 1.00% by mass or more to 3.00% by mass or less on the basis of the total mass of the ink. Since the blue ink of the present invention contains a plurality of types of dyes and a plurality of types of pigments, the content $M_D$ of the dyes and the content $M_P$ of the pigments are the total contents of a plurality of types of dyes and a plurality of types of pigments, respectively.

In the present invention, the total content $M_C$ (% by mass) of the colorants in the blue ink is preferably 4.00% by mass or more to 8.00% by mass or less. When the $M_C$ value is less than 4.00% by mass, sufficient readability may not be obtained, while the $M_C$ value is more than 8.00% by mass, sufficient ejection stability may not be obtained. In addition, the content $M_P$ (% by mass) of the pigments in the blue ink is 0.50 times or more to 0.70 times or less the content $M_D$ (% by mass) of the dyes. In other words, the value of $M_P/M_D$ is 0.50 or more to 0.70 or less. When the value of $M_P/M_D$ is less than 0.50, sufficient water resistance of a recorded image may not be obtained. On the other hand, when the value of $M_P/M_D$ is more than 0.70, the content of the dyes is relatively small, and thus running of the blue ink little occurs on a recording medium to which the blue ink is applied. As a result, the sufficient optical density of a cyan component may not be obtained, thereby failing to achieve sufficient readability of a bar code. Further, the content $M_V$ (% by mass) of the C. I. Pigment Violet 23 in the blue ink is preferably 0.10 times or more to 0.20 times or less the total content $M_C$ (% by mass) of the colorants. In other words, the value of $M_V/M_C$ is preferably 0.10 or more to 0.20 or less. When the value of $M_V/M_C$ is less than 0.10, a hue preferred as the blue ink used in a mailing system may not be obtained. On the other hand, when the value of $M_V/M_C$ is more than 0.20, the sufficient optical density of a cyan component may not be obtained, thereby failing to achieve sufficient readability of a bar code. The content of each component represents the content value on the basis of the total mass of the ink. The blue ink of the present invention may contain a colorant different from those specified in the present invention. In this case, however, each of the dye content $M_D$, the pigment content $M_P$, and the colorant content $M_C$ is calculated as a value including the content of the different colorant.

(Aqueous medium)

The blue ink of the present invention preferably contains water or a mixed medium of water and a water-soluble organic solvent as an aqueous medium. The content (% by mass) of water in the blue ink is preferably 50.00% by mass or more to 95.00% by mass or less on the basis of the total mass of the ink. In addition, the content (% by mass) of the water-soluble organic solvent in the blue ink is preferably 1.00% by mass or more to 50.00% by mass or less on the basis of the total mass of the ink. The content of the water-soluble organic solvent is the content including the content of each of 2-pyrrolidone and polyethylene glycol with an average molecular weight of 1,000 which will be described below.

As the water, deionized water or ion exchanged water is preferably used. As the water-soluble organic solvent, for example, the following solvents can be used: monohydric alcohols having about 1 to 4 carbon atoms, such as methyl alcohol, ethyl alcohol, n-propyl alcohol, isopropyl alcohol, n-butyl alcohol, sec-butyl alcohol, tert-butyl alcohol, and the like; amides, such as dimethylformamide, dimethylacetamide, and the like; ketones or keto alcohols, such as acetone, diacetone alcohol, and the like; ethers, such as tetrahydrofuran, dioxane, and the like; polyalkylene glycols, such as polyethylene glycol, polypropylene glycol, and the like having an average molecular weight of about 200 to 2,000, specifically 200, 600, 1,000, 2,000, or the like; alkylene glycols containing an alkylene group having 2 to 6 carbon atoms, such as ethylene glycol, propylene glycol, butylene glycol, diethylene glycol, triethylene glycol, tetraethylene glycol, hexylene glycol, thiodiglycol, and the like; alkyl ether acetates, such as polyethylene glycol monomethyl ether acetate and the like; polyhydric alcohols, such as 1,2-propanediol, 1,2-pentanediol, 1,5-pentanediol, 1,2-hexanediol, 1,6-hexanediol, 1,2,6-hexanetriol, glycerin, and the like; polyhydric alcohol alkyl ethers, such as ethylene glycol monomethyl (or ethyl) ether, diethylene glycol methyl (or ethyl) ether, triethylene glycol monomethyl (or ethyl) ether, and the like; and nitrogen-containing compounds, such as N-methyl-2-pyrrolidone, 2-pyrrolidone, 1,3-dimethyl-2-imidazolidinone, and the like. Of course, the water-soluble organic solvent which can be used in the blue ink of the present invention is not limited to these.

In an ink containing a dye, the dye is present in a dissolved state in an aqueous medium constituting the ink, and thus the amount of water hydrating a pigment is relatively smaller than that of an ink not containing a dye because water is required for hydrating the dye. Therefore, in the blue ink of the present invention which contains both a pigment and a dye as colorants, the dispersion stability of the pigment is relatively low, and thus ejection stability is also relatively low as compared with an ink containing only a pigment as a colorant. Therefore, polyethylene glycol having an average molecular weight of 1,000 and known to have the effect of supporting ejection was added to the ink, and as a result, the inventors found that the effect of improving ejection stability can be achieved, but the preservation stability of the ink may be decreased. The inventors consider the reason for this to be that the dispersed state of the pigments (C. I. Pigment Blue 15:3 and C. I. Pigment Violet 23) dispersed with a resin is easily destabilized by polyethylene glycol having an average molecular weight of 1,000.

Therefore, the inventors investigated a composition of an ink containing polyethylene glycol having an average molecular weight of 1,000 and capable of improving the preservation stability of the ink while achieving the effect of improving the ejection stability. As a result, it was found to be preferred that 2-pyrrolidone is combined with polyethylene glycol having an average molecular weight of 1,000. The inventors considered the reason for this as follows. In the course of investigation, the inventors found that the dispersed state of the pigments (C. I. Pigment Blue 15:3 and C. I. Pigment Violet 23) dispersed with a resin is also easily destabilized by 2-pyrrolidone. Namely, the dispersed state of the pigments (C. I. Pigment Blue 15:3 and C. I. Pigment Violet 23) dispersed with a resin is easily destabilized by any one of 2-pyrrolidone and polyethylene glycol having an average molecular weight of 1,000. However, these water-soluble organic solvents have high compatibility and dissolutions in the aqueous medium are compensated by each other, and thus the solvents little contribute to the dispersed state of the pigments, thereby improving the preservation stability of the ink without impairing the effect of improving ejection stability. For this reason, the dispersed state of the pigments in the ink can be particularly stably maintained by adding 2-pyrrolidone and polyethylene glycol having an average molecular weight of 1,000, and the effect of further improving ejection stability can be achieved.

In the present invention, the content $M_A$ (% by mass) of 2-pyrrolidone in the blue ink is preferably 1.00% by mass or more to 8.00% by mass or less on the basis of the total mass of the ink. In addition, the content $M_B$ (% by mass) of polyethylene glycol having an average molecular weight of 1,000 is preferably 0.50% by mass or more to 5.00% by mass or less.

In the present invention, the total of the content $M_A$ (% by mass) of 2-pyrrolidone and the content $M_B$ (% by mass) of polyethylene glycol having an average molecular weight of 1,000 in the blue ink is preferably 3.00% by mass or more to 9.00% by mass or less. Namely, the value of $M_A + M_B$ is preferably 3.00% by mass or more to 9.00% by mass or less. When the value of $M_A + M_B$ is less than 3.00% by mass, the effect of further improving ejection stability may not be obtained because of the small amount of the water-soluble organic solvents present around the pigments. On the other hand, when the value of $M_A + M_B$ is more than 9.00% by mass, the effect of further improving ejection stability may not be obtained because of the excessively high viscosity of the ink. Further, the content $M_A$ (% by mass) of 2-pyrrolidone in the blue ink is preferably 1.00 time or more to 5.00 times or less the content $M_B$ (% by mass) of polyethylene glycol having an average molecular weight of 1,000. In other words, the value of $M_A/M_B$ is preferably 1.00 or more to 5.00 or less. When the value of $M_A/M_B$ is less than 1.00 or more than 5.00, the effect of combination of 2-pyrrolidone and polyethylene glycol having an average molecular weight of 1,000 may not be exhibited, thereby failing to achieve sufficient ejection stability. The content of each of the components is based on the total mass of the ink.

In the present invention, the average molecular weight of the polyethylene glycol is in a range of the value thereof $\pm$ 30. In the present invention, the average molecular weight of the polyethylene glycol which can be preferably used is 1,000, but it ranges from about 970 to 1,030. In more detail, polyethylene glycol having an average molecular weight of about 970 to 1,030 determined by a measurement method described below is regarded as the polyethylene glycol having an average molecular weight of 1,000.

In the present invention, the average molecular weight of polyethylene glycol can be measured as follows. In a flask with a ground stopper, 1 g of a polyethylene sample to be measured (weighed to a digit of 0.1 mg) is placed in 25 mL of an anhydrous phthalpyridine solution precisely weighed, and the flask is stoppered, heated in boiling water for 2 hours, and then allowed to stand to room temperature. Then, 50 mL of a 0.5 mol/L aqueous sodium hydroxide solution is precisely weighed and placed in the flask, and further 10 droplets of an aqueous phenolphthalein solution for titration are added thereto. The liquid in the flask is titrated with a 0.5 mol/L aqueous sodium hydroxide solution, and a point where the liquid maintains purple color for 15 seconds is determined as an end point. The average molecular weight is calculated on the basis of the equation below from a titer M (mL) obtained in the above-described main test and a titer R (mL) obtained by a blank test performed by the same method as described above except that the polyethylene glycol sample is not used.

[Equation 1]

$$\text{Average molecular weight} = [\text{Amount [g] of polyethylene glycol collected} \times 4000]/[(\text{Titer M [mL] of main test} - \text{Titer R [mL] of blank test}) \times 0.5 \text{ [mol/L]}]$$

(Dispersion method for pigment)

As a method for dispersing the pigments in the aqueous medium constituting the ink, a resin-dispersed pigment which is dispersed using a resin as a dispersant or a self-dispersible pigment having hydrophilic groups introduced in the surfaces of pigment particles can be used. In addition, a resin-bonded self-dispersible pigment having polymer-containing organic groups chemically bonded to the surfaces of pigment particles, a microcapsule-type pigment containing a resin which partially covers the surfaces of pigment particles, or the like may be used. Of course, these dispersion methods may be combined.

In the present invention, a resin-dispersed pigment which is dispersed in the aqueous medium using a resin is preferably used, and as the resin, a water-soluble copolymer or a salt thereof which is synthesized from a material containing the following monomer is preferably used: a hydrophobic monomer, such as styrene, $\delta,\beta$-ethylenic unsaturated carboxylic acid aliphatic alcohol ester, vinylnaphthalene, benzyl (meth)acrylate, a derivative thereof, or the like; a water-soluble monomer, such as (meth)acrylic acid, maleic acid, itaconic acid, fumaric acid, crotonic acid, styrenesulfonic acid, vinyl acetate, vinyl alcohol, vinyl pyrrolidone, acrylamide, or a derivative thereof, or the like. In addition, at lease one of the monomers constituting the resin is preferably a hydrophilic monomer. A structure of a copolymer may be a block, random, or graft copolymer, or the like. Further, as the dispersant, a resin having an acid value of 50 mg KOH/g or more to 300 mg KOH/g or less is preferably used, and a resin having a weight-average molecular weight of 1,000 or more to 30,000 or less, more preferably 3,000 or more to 15,000 or less, is preferably used. The ratio by mass of the resin content (% by mass) to the pigment content (% by mass) in the blue ink is preferably 0.10 or more to 3.00 or less, i.e., resin content/pigment content = 0.10 or more to 3.00 or less.

(Other ink components)

Besides the above-described components, the blue ink of the present invention may contain a compound which is solid at room temperature, such as urea, a urea derivative, trimethylol ethane, trimethylol propane, or the like. Such a compound is particularly preferred for maintaining the moisture retention of the ink. The content (% by mass) of a compound which is solid at room temperature in the blue ink is preferably 0.10% by mass or more to 20.00% by mass or less, more preferably 3.00% by mass or more to 10.00% by mass or less, on the basis of the total mass of the ink. Further, the blue ink of the present invention may contain various additives such as a surfactant, a pH adjuster, an anticorrosive agent, an antiseptic agent, a fungicide, an antioxidant, a reduction preventive agent, an evaporation promoter, a corrosion inhibitor, a chelating agent, and the like according to demand.

The blue ink of the present invention preferably contains a surfactant, particularly preferably a nonionic surfactant, because ejection stability can be further improved. Examples of the nonionic surfactant include polyoxyethylene alkyl ethers, polyoxyethylene alkyl phenyl ethers, acetylene glycol ethylene oxide adducts, and the like. Also, fatty acid esters such as polyoxyethylene fatty acid esters, sorbitan fatty acid esters, polyoxyethylene sorbitan fatty acid esters, and the like can be used as the nonionic surfactant. In the blue ink of the present invention, a surfactant having a HLB value of 10 or more, more preferably 12 or more, particularly 13 or more, which is determined by a Griffin method, is preferably used. The content (% by mass) of the surfactant in the blue ink is preferably 0.30% by mass or more to 3.00% by mass or less, more preferably 0.30% by mass or more to 2.50% by mass or less, particularly 0.30% by mass or more to 2.00% by mass or less, on the basis of the total mass of the ink. When the content of the surfactant is less than 0.30% by mass, the effect of improving ejection stability may not be sufficiently obtained, while the content is more than 3.00% by mass, the effect of improving ejection stability may not be sufficiently obtained because of the excessively high viscosity of the ink. ,

The blue ink of the present invention configured as described above can be preferably used as an ink to be ejected from an ink jet-system recording head. In particular, when recording is continuously performed as in a mailing system, the blue ink of the present invention can be particularly preferably used because it is important to satisfy recording durability.

<Recording medium>

As a recording medium on which recording is performed with the ink of the present invention, mails such as an envelope, a postcard, and the like can be used, but any other recording medium may be used as long as a two-dimensional bar code can be recorded.

<Ink jet recoding method>

The ink jet recording method of the present invention is to record a two-dimensional bar code or the like on the above-described recording medium by ejecting the ink of the present invention from an ink jet-system recording head. As a method for ejecting the ink, a method for ejecting the ink by the action of kinetic energy, a method for ejecting the ink by the action of thermal energy, or the like can be used. In the present invention, the method for ejecting the ink by the action of thermal energy is particularly preferably used.

(Recording conditions)

The ink jet recording method of the present invention preferably enables high-quality, high-speed recording of character and design information, two-dimensional bar codes, and the like on recording media such as envelopes, postcards, and the like having different ink absorption characteristics. Therefore, the recording conditions (resolution, the amount of ink ejected, ejection frequency, and the number of recording scans) are preferably set as described below.

(Resolution)

The inventors investigated resolution for improving recording quality of character and design information and the like and for precisely recognizing a two-dimensional bar code with a bar code reader. As a result, it was found that resolution of recording is preferably set in the range of 300 dpi x 300 dpi to 600 dpi x 600 dpi. When the resolution is as low as less than 300 dpi x300 dpi, recording quality of character and design information and the like may not be sufficiently obtained, or definition of a two-dimensional bar code may not be sufficiently obtained, thereby causing failure in reading with a bar code reader. On the other hand, when the resolution is increased to be higher than 600 dpi x 600 dpi, recording quality is increased, but reading precision of a two-dimensional bar code with a bar code reader and the efficiency of machine processing are not changed even by increasing the resolution. Therefore, a mechanism for driving a recording device at a higher speed may be required, resulting in an increase in cost.

(Amount of ink ejected)

In order to record a two-dimensional bar code having definition and contrast which can be precisely recognized with a bar code reader, i.e., excellent definition, within the above-described preferred resolution range, the amount of ink ejected is preferably set as follows. Specifically, the amount of ink ejected is preferably 15 ng or more to 40 ng or less, more preferably 20 ng or more to 34 ng or less, per ink dot. When the amount of ejection is less than 15 ng, coverage of a recording medium with colorants may be decreased, and an optical density sufficient to secure a contrast may not be obtained, resulting in insufficient definition. On the other hand, when the amount of ejection is more than 40 ng, the ink excessively runs on a recording medium, and sufficient definition in a portion to which the ink is applied may not be obtained, easily causing failure in reading with a bar code reader.

(Ejection frequency)

The ejection frequency (driving frequency of a recording head) is preferably 10 kHz or more to 40 kHz or less within the above-described preferred resolution range. When the ejection frequency is less than 10 kHz, it may be difficult to process a large amount of mails because of the low recording speed. On the other hand, when the ejection frequency is more than 40 kHz, the recording head for ejecting the ink may be driven at a very high frequency, and sufficient recording durability may not be obtained.

(Number of recording scans)

In the ink jet recording method of the present invention, an image in a unit area of the recording medium is preferably recorded by one pass from the viewpoint of achieving a recording speed applicable to a mailing system of processing a large amount of mails at a high speed. A method of recording an image by one time of main scanning of the recording head on a unit area of a recording medium is referred to as "one-pass recording", and the one-pass recording is performed in at least one of the forward and backward directions of main scanning. In addition, a method of recording an image by n times of main scanning of the recording head on a unit area of a recording medium is referred to as "n-pass recording (n is 1 or more)". The unit area represents one pixel, one band, or the like, and the unit area can be set as any one of various areas according to demand. The term "one pixel" represents a pixel corresponding to resolution, and the term "one band" represents an area of an image recorded by one scan of the recording head.

<Recording head and ink jet recording apparatus>

(In jet recording apparatus)

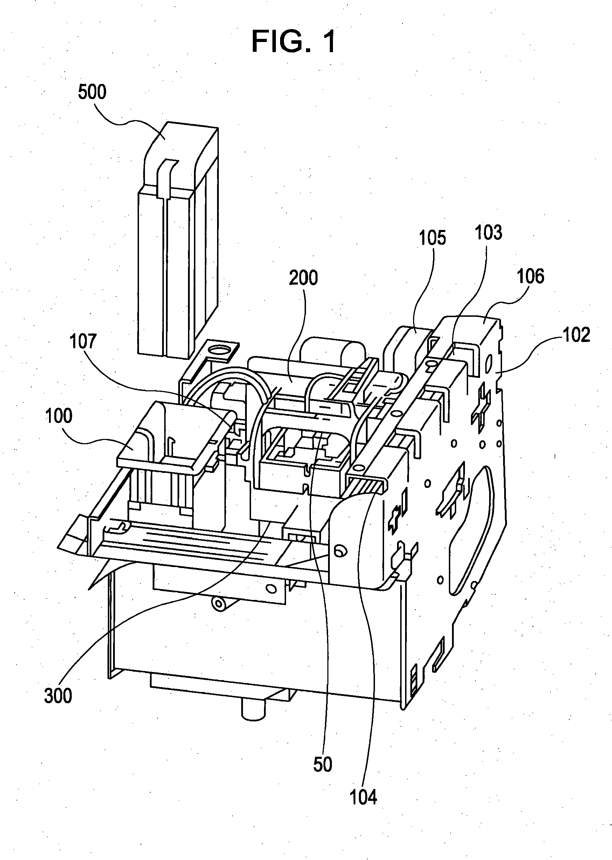

The configuration of the ink jet recording apparatus of the present invention is described with reference to the drawings. Fig. 1 is a perspective view showing a configuration of an ink jet recording apparatus. The ink jet recording apparatus of the present invention is adapted for continuously recording character and design information, two-dimensional bar codes, and the like on recording media such as envelopes and postcards, continuous paper which can be cut at any desired positions, and the like, and is detachably mounted on a mail processing apparatus.

Main units constituting the ink jet recording apparatus are described below. The ink jet recording apparatus includes a recording head 50 which ejects an ink, and a carriage unit including a carriage 200 which is provided with the recording head 50 and which moves the recording head 50 between a recording position and a waiting position. The ink jet recording apparatus is also provided with a supply unit 100 on which a main cartridge 500 is detachably mounted and which supplies inks to the recording head. In addition, the ink jet recording apparatus is provided with a recovery unit 300 which recovers the ink ejection performance of the recording head 50 by absorbing, together with the ink near orifices of the recording head 50, unnecessary ink and dust produced in the recording head 50. Further, the ink jet recording apparatus is provided with a control unit having a control substrate 107 for electric control of recording operations, and a power supply unit not shown. These units are received and supported in a frame 106.

The frame 106 has four sides 102 and a bottom which are composed of a sheet metal. In addition, a CR shaft 104 and a CR rail 103 which slidably support the carriage 200 are attached in parallel to each other to one of the sides 102 of the frame 106. The carriage 200 is reciprocated along the CR rail 103 (vertical direction in Fig. 1) in the frame 106 by transmission of driving force of a driving motor 105 through a belt not shown.

In the recording head 50, the two positions, i.e., the front and rear ends of the reciprocation range of the carriage 200 on which the recording head 50 is mounted are recording positions, and a central portion of reciprocation is a position of recovery by the recovery unit 300. At the recording positions not shown, the recording head 50 to which electric signals are sent ejects the ink toward the recording medium not shown from a plurality of orifices. In this case, after the recording head 50 is positioned at the recording positions, the recording medium is transferred to pass immediately below the orifices of the recording head 50, and the ejection frequency of the recording head 50 and the transfer rate of the recording medium are controlled so that desired resolution is achieved for recording an image. As described above, in the present invention, ink droplets are preferably applied with a nozzle resolution (arrangement space of the orifices) of the recording head 50 of 600 dpi and 300 dpi in the transfer direction (vertical scanning direction) of the recording medium. Although a mode in which the recording head 50 is fixed to the carriage 200 is described above, the mode is not limited to this, and a mode in which the recording head is driven horizontally (horizontal scanning direction) to perform serial-system recording may be used. Also, a mode in which the recording head 50 receives and ejects only one type of ink is described above. However, the present invention is not limited to this mode, and the recording head may contain a plurality of types of inks as long as an image can be recorded within the resolution range of 300 dpi x 300 dpi to 600 dpi x 600 dpi by one time of scanning of the recording head.

(Recording head)

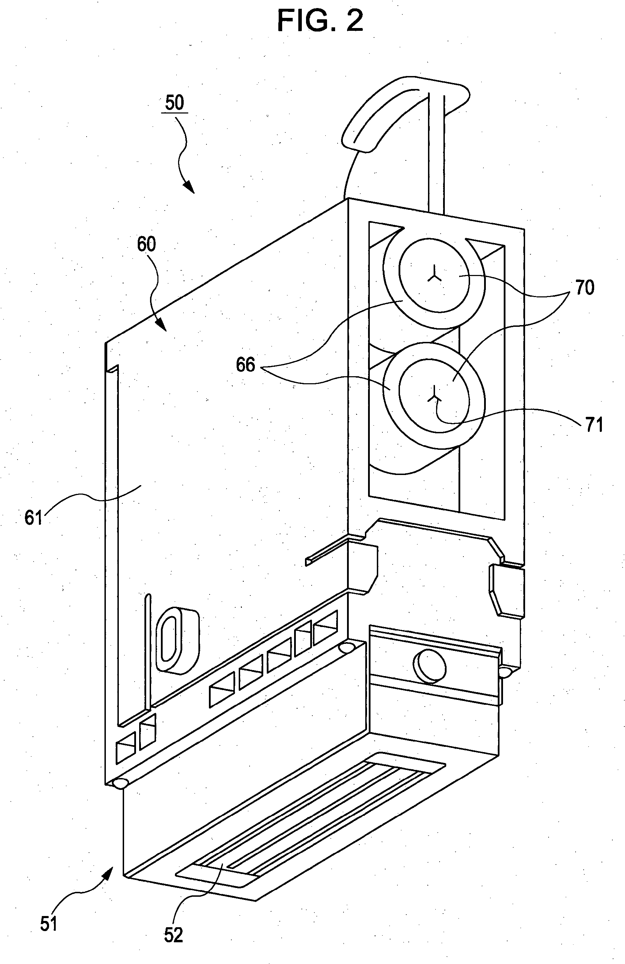

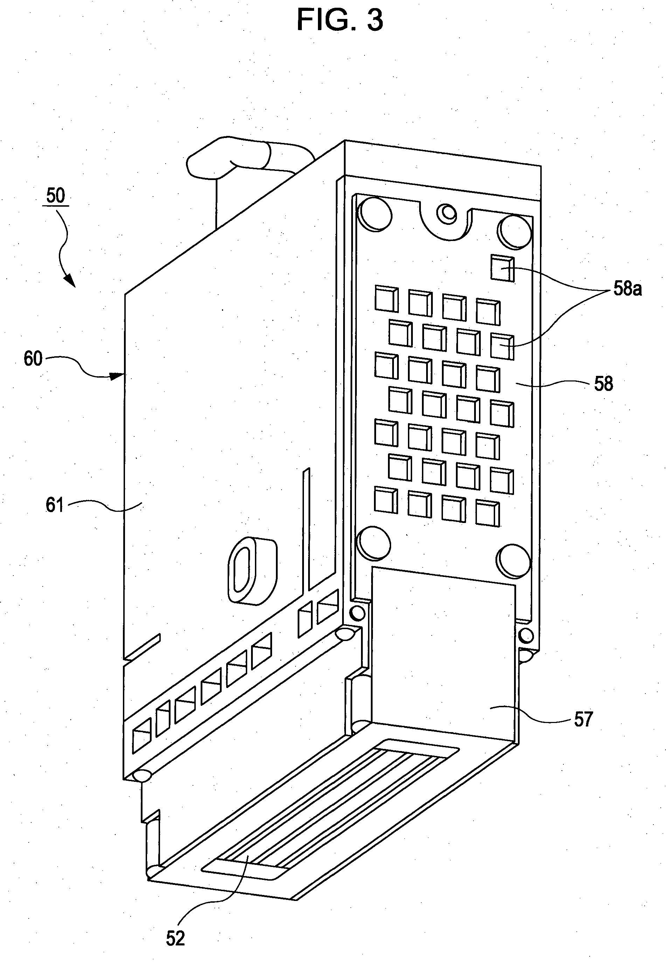

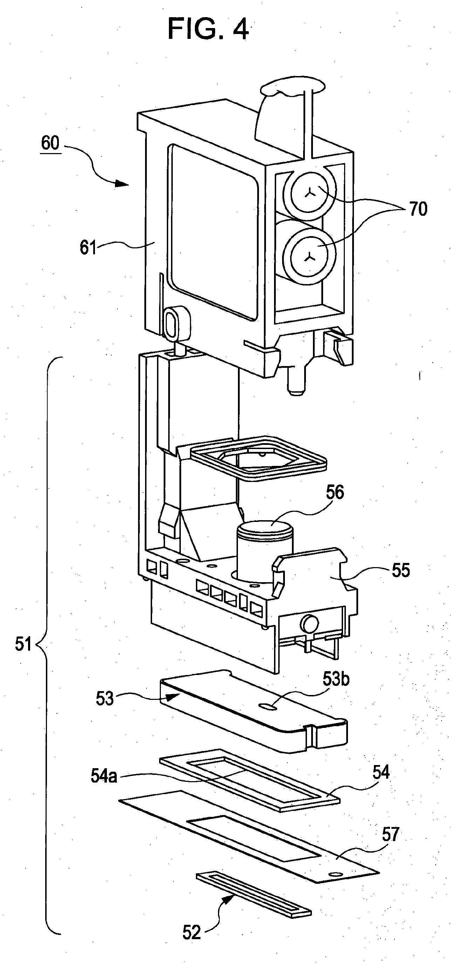

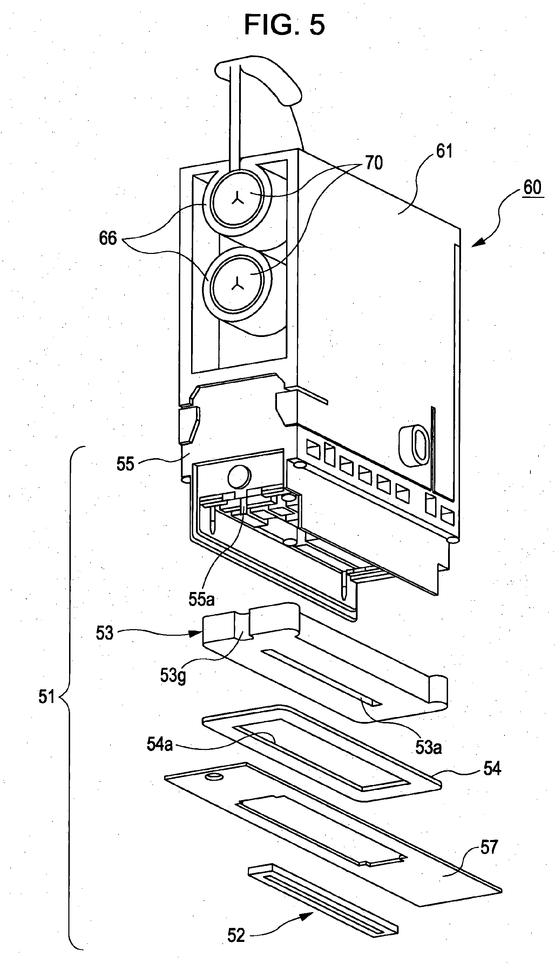

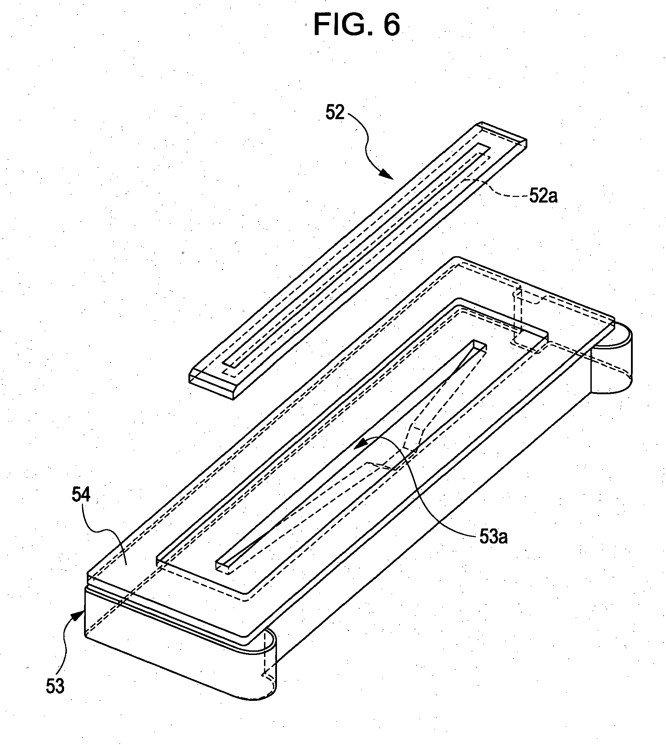

The configuration of the recording head 50 is described below. Figs. 2 and 3 are each a perspective view showing the configuration of the recording head 50. Figs. 4 and 5 are each an exploded perspective view of a recording unit. Fig. 6 is an enlarged perspective view showing a recording element substrate. As shown in these drawings, the recording head 50 of the present invention is configured as a cartridge detachable from the carriage 200 (refer to Fig. 1) and is provided with a recording unit 51 and an ink storage unit 60 as shown in Figs. 4 and 5. The recording unit 51 and the ink storage unit 60 can be detachably connected to each other. The ink storage unit 60 receives the ink to be supplied to the recording unit 51, and the recording unit 51 ejects ink droplets.

[Recording unit]

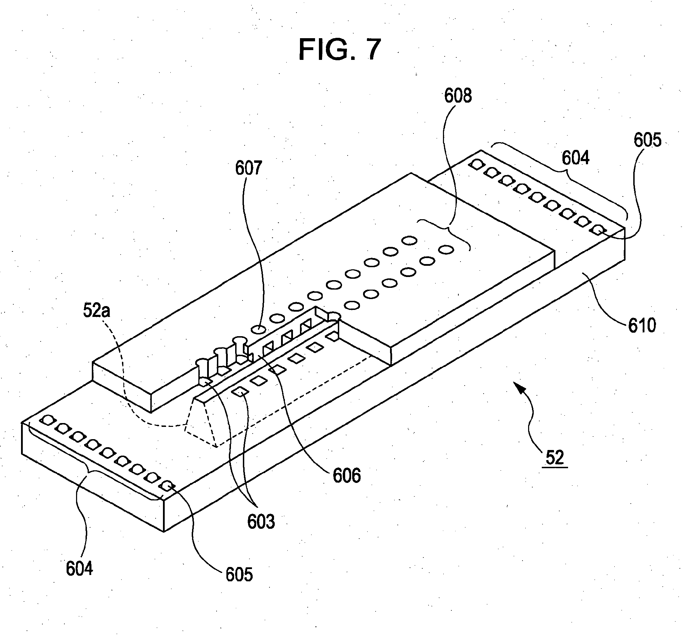

As shown in Figs. 2 to 5, the recording unit 51 includes a recording element substrate 52, a supporting substrate 53, a plate 54, a passage forming member 55, a porous member 56, a sheet electric wiring substrate 57, a contact terminal wiring substrate 58, and the like. The recording element substrate 52 includes a silicon substrate (610; refer to Fig. 7) on one surface of which a plurality of recording elements (electrothermal converters 603; refer to Fig. 7) for ejecting an ink and Al wiring for supplying electric power to the recording elements are formed by a film-forming technique. In the silicon substrate (610; refer to Fig. 7), a plurality of ink flow passages and a plurality of orifices (not shown in the drawings) corresponding to the recording elements are formed by a photolithography technique. In addition, as shown in Fig. 6, an ink supply port 52a is provided on the back side (supporting substrate 53 side) of the recording element substrate 52, for supplying the ink to the plurality of ink flow passages connected to the respective orifices from the ink storage unit 60.

Fig. 7 is a partially cut-away perspective view showing a recording element substrate. The recording element substrate 52 includes the ink supply port 52a including a long groove-like through hole and being formed as an ink passage in the silicon substrate 610 having a thickness of about 0.5 to 1 mm by a method such as anisotropic etching using crystal orientation of silicon, sand blasting, or the like. The electrothermal converters 603 are formed in a line each of both sides of the ink supply port 52a, and electric wiring (not shown) composed of Al is formed by a deposition technique, for supplying electric power to the electrothermal converters 603. The electrothermal converters 603 in both lines are arranged in a staggered form, i.e., the orifices 607 in both lines are arranged so as not to align in a direction perpendicular to the arrangement line direction. In the silicon substrate 610, electrode portions 604 are formed along the side edges outside the electrothermal converters 603, in order to supply electric power to the electric wiring not shown and transmit electric signals for driving the electrothermal converters 603. Further, bumps 605 composed of Au are formed on the electrode portions 604. In addition, ink passage walls 606 which form ink flow passages corresponding to the respective electrothermal converters 603 and the orifices 607 are formed by photolithography on the surface of the silicon substrate 610, on which the pattern is formed, thereby forming an orifice group 608. The ink supplied from the ink supply port 52a is ejected from the orifices 607 corresponding to the electrothermal converters 603 by the pressure of bubbles generated due to the heat generated in the electrothermal converters 603.

In the present invention, in the recording head, the orifices 607 constituting the orifice group 608 are preferably arranged with a space of 300 dpi in a staggered form in two lines. In this case, the amount of ink ejected from each of the orifices is preferably 15 ng to 40 ng per ink dot.

The recording element substrate 52 is bonded to the supporting substrate 53. The supporting substrate 53 is made of a rigid material such as ceramic, alumina, or the like and has an ink flow passage 53a for supplying the ink to the recording element substrate 52. The ink flow passage 53a communicates with a supply port 53b (refer to Fig. 4) provided on the back surface (the passage forming member 55 side) of the supporting substrate 53. In addition, the plate 54 is fixed to the supporting substrate 53 with an adhesive. The plate 54 has an opening 54a for avoiding interference with the recording element substrate 52, the recording element substrate 52 being disposed in the opening 54a. The supporting substrate 53 is fixed to the passage forming member 55 by bonding means such as an adhesive, screws, or the like.

As shown in Fig. 4, the passage forming member 55 has a substantially L-shaped form in which an ink flow passage (not shown) is disposed for flowing the ink. When the supporting substrate 53 is fixed to the passage forming member 55, the ink passages of both members are communicated with each other through the supply port 53b. Further, the porous member 56 is bonded to the passage forming member 55. The porous member 56 is bonded to the passage forming member 55 on the side opposite to the supporting substrate 53. When the ink is supplied to the recording element substrate 52 from the ink storage unit 60 side, the presence of the porous member 56 prevents the ink supplied to the recording element substrate 52 from being contaminated with dust.

The sheet electric wiring substrate 57 is bonded to the upper surface of the plate 54 on the supporting substrate 53, and the sheet electric wiring substrate 57 is electrically connected to the recording elements (electrothermal converters; refer to Fig. 7) of the recording element substrate 52. The sheet electric wiring substrate 57 is bonded to the contact terminal wiring substrate 58 disposed on the back of the passage forming member 55 by connection means such as ACF, lead bonding, wire bonding, connectors, or the like. A series of electric wiring portions formed by connecting the sheet electric wiring substrate 57 and the contact terminal wiring substrate 58 is adapted for applying electric signals for ejecting the ink to the recording element substrate 52. The contact terminal wiring substrate 58 includes a plurality of signal input terminals 58a which receive electric signals from the ink jet recording apparatus (refer to Fig. 1). As a result, electric signals for ejecting the ink can be applied to each of the recording elements (electrothermal converters: refer to Fig. 7) of the recording element substrate 52 through the contact terminal wiring substrate 58 and the sheet electric wiring terminal 57. When electric pulse signals are supplied as recording signals to each of the electrothermal converters from the ink jet recording apparatus, thermal energy is applied to the ink, and bubbles (film boiling) occur in the ink due to phase change of the ink. The ink is ejected as droplets from each of the orifices 607 (refer to Fig. 7) of the recording head 50 due to the pressure of the bubbles. Although a configuration mode in which the sheet electric wiring substrate 57 and the contact terminal wiring substrate 58 are separated from each other is described above, the present invention is not limited to this, and an electric wiring portion configured by integrating the sheet electric wiring substrate 57 and the contact terminal wiring substrate 58 may be used.

[Ink storage unit]

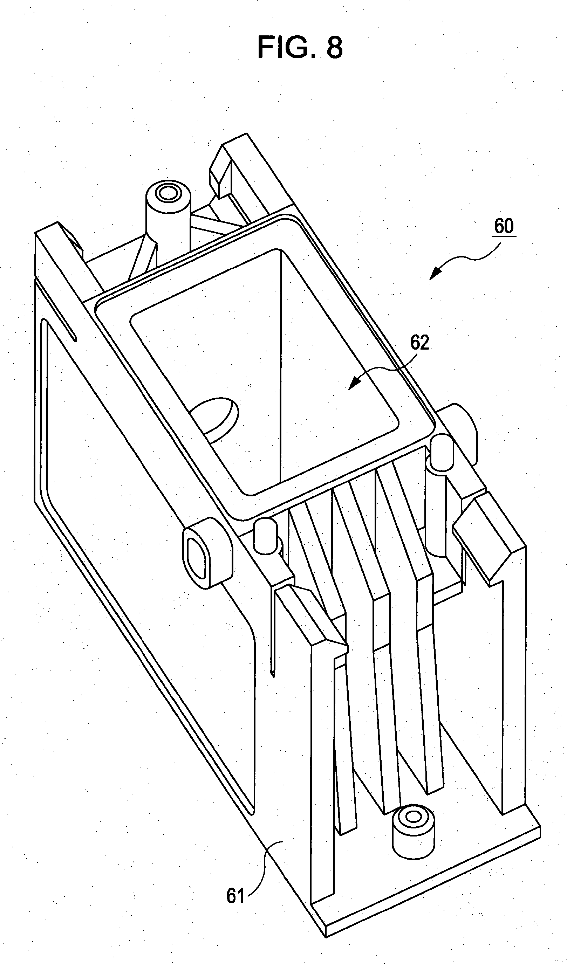

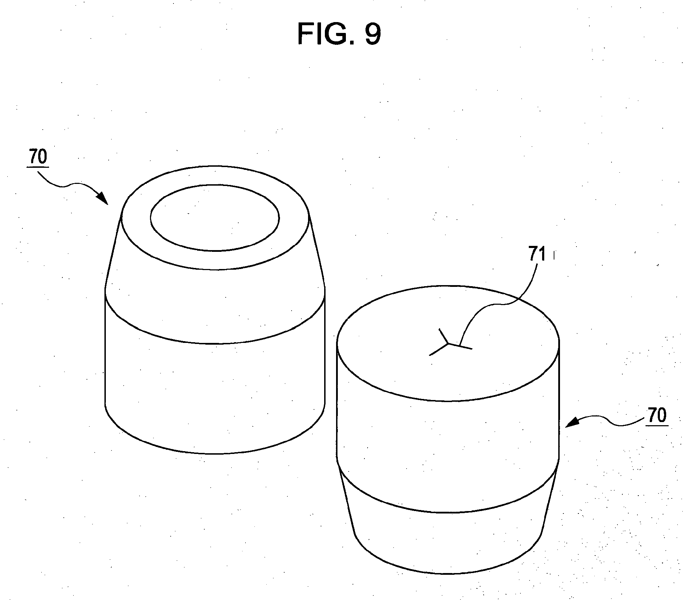

A configuration for supplying the ink to the recording head 50 is described. Fig. 8 is an enlarged perspective view showing an ink storage unit, and Fig. 9 is a perspective view showing a joint rubber. A circular hole portion 66 and a joint rubber 70 are disposed at two positions of the back surface of the frame 61 (refer to Figs. 2 and 5). The circular hole portion 66 and the joint rubber 70 on the lower side constitute a supply passage for supplying the ink to the ink storage unit 60 from an external ink storage cartridge not shown and provided on the ink jet recording apparatus (refer to Fig. 1). Namely, the ink is supplied to a common liquid chamber 62 through the supply passage. In this case, an ink supply needle not shown and provided on the ink jet recording apparatus (refer to Fig. 1) is inserted into the common liquid chamber 62 of the frame 61 so as to open a central slit 71 of the joint rubber 70 shown in Fig. 90 so that the ink is supplied into the common liquid chamber 62. The circular hole portion 66 and the joint rubber 70 on the upper side constitute an air intake passage for generating negative pressure in the common liquid chamber 62 by discharging the air present in the common liquid chamber 62 to the outside. The pressure in the common liquid chamber 62 is controlled by discharging the air in the common liquid chamber 62 from the air intake passage to the outside using air intake means such as a pump or the like. That is, the negative pressure in the common liquid chamber 62 is increased using the air intake passage so that ink supply to the common liquid chamber 62 can be controlled.

A mode in which the ink is supplied from the external ink storage cartridge to the ink storage unit of the recording head is described. However, the present invention is not limited to this mode, and a recording head may be configured by integrating an ink cartridge and a recording unit.

EXAMPLES

The present invention is described in further detail below by giving examples and comparative examples, but the present invention is not limited to the examples described below unless being beyond the scope of the gist of the present invention. In description of preparation of a pigment dispersion solution and an ink composition, "parts" and "%" are "parts by mass" and "% by mass", respectively, unless otherwise specified.

<Preparation of pigment dispersion solution>

(Pigment dispersion solution 1)

In a batch-type vertical sand mill, 25 parts of C. I. Pigment Blue 15:3 (pigment; manufactured by Clariant), 12.5 parts of resin A, and 62.5 parts of ion exchanged water were mixed and dispersed for 3 hours. The resin A was prepared by neutralizing with a 10% aqueous potassium hydroxide solution a styrene/benzyl methacrylate/acrylic acid copolymer at a copolymerization ratio (ratio by mass) of 16/65/19, and had a weight average molecular weight of 10,000 and an acid value of 150 mgKOH/g. Then, the resultant dispersion was filtered under pressure with a filter having a pore size of 2.5 $\mu$m (trade name: HDCII; manufactured by Pall Corporation), and then an appropriate amount of water was added to the filtrate to prepare pigment dispersion solution 1 having a pigment content of 20.0% and a resin content of 10.0%.

(Pigment dispersion solution 2)

Pigment dispersion solution 2 having a pigment content of 20.0% and a resin content of 10.0% was prepared by the same method as for pigment dispersion solution 1 except that C. I. Pigment Violet 23 (pigment; manufactured by Dainichiseika Co., Ltd.) was used in place of the pigment used for preparing pigment dispersion solution 1.

(Pigment dispersion solution 3)

Pigment dispersion solution 3 having a pigment content of 20.0% and a resin content of 10.0% was prepared by the same method as for pigment dispersion solution 1 except that C. I. Pigment Black 7 (pigment; trade name: #2600; manufactured by Mitsubishi Chemical Corporation) was used in place of the pigment used for preparing pigment dispersion solution 1.

(Pigment dispersion solution 4)

Pigment dispersion solution 4 having a pigment content of 20.0% and a resin content of 10.0% was prepared by the same method as for pigment dispersion solution 1 except that C. I. Pigment Blue 60 (pigment; manufactured by BASF) was used in place of the pigment used for preparing pigment dispersion solution 1.

(Pigment dispersion solution 5)

Pigment dispersion solution 5 having a pigment content of 20.0% and a resin content of 10.0% was prepared by the same method as for pigment dispersion solution 1 except that C. I. Pigment Blue 15:4 (pigment; manufactured by Clariant) was used in place of the pigment used for preparing pigment dispersion solution 1.

(Pigment dispersion solution 6)

Pigment dispersion solution 6 having a pigment content of 20.0% and a resin content of 10.0% was prepared by the same method as for pigment dispersion solution 1 except that C. I. Pigment Violet 19 (pigment; manufactured by Clariant) was used in place of the pigment used for preparing pigment dispersion solution 1.

(Pigment dispersion solution 7)

Pigment dispersion solution 7 having a pigment content of 20.0% and a resin content of 10.0% was prepared by the same method as for dispersion solution 1 except that C. I. Pigment Red 122 (pigment; manufactured by Dainichiseika Co., Ltd.) was used in addition to the pigment used for preparing pigment dispersion solution 1.

<Preparation of blue ink>

(Inks 1 to 34)

The components shown in Tables 1 to 3 were mixed and sufficiently stirred. Then, each of the resultant mixtures was filtered under pressure with a filter having a pore size of 1.2 $\mu$m (trade name: HDCII; manufactured by Pall Corporation) to prepare inks 1 to 34. C. I. Direct Blue 199, C. I. Acid Blue 9, and C. I. Direct Black 195 were dyes manufactured by Fujifilm Imaging Colorant, and C. I. Food Black 2 was a dye manufactured by Mitsubishi Chemical Corporation. In addition, polyethylene glycol had an average molecular weight of 1,000. Acetylenol E100 (HLB value: 13) was a nonionic surfactant manufactured by Kawaken Fine Chemical Co., Ltd.

[Table 1]

Table 1: Composition of ink

(unit: %)

| | Ink No. | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| C. I. Direct Blue 199 | 1.82 | 3.65 | 1.78 | 3.69 | 2.80 | 2.36 | 3.00 | 2.20 | 2.60 | 2.60 | 2.60 | 2.60 |
| C. I. Food Black 2 | 0.70 | 1.40 | 0.68 | 1.42 | 1.00 | 1.00 | 1.00 | 1.00 | 1.00 | 1.00 | 1.00 | 1.00 |
| C. I. Acid Blue 9 | | | | | | | | | | | | |
| C. I. Direct Black 195 | | | | | | | | | | | | |
| Pigment dispersion solution 1 | 4.60 | 9.15 | 4.45 | 9.25 | 5.50 | 7.70 | 4.50 | 8.50 | 7.65 | 4.70 | 8.00 | 4.50 |
| Pigment dispersion solution 2 | 2.80 | 5.60 | 2.75 | 5.70 | 4.00 | 4.00 | 4.00 | 4.00 | 2.85 | 5.80 | 2.50 | 6.00 |
| Pigment dispersion solution 3 | | | | | | | | | | | | |
| Pigment dispersion solution 4 | | | | | | | | | | | | |
| Pigment dispersion solution 5 | | | | | | | | | | | | |
| Pigment dispersion solution 6 | | | | | | | | | | | | |
| Pigment dispersion solution 7 | | | | | | | | | | | | |
| Glycerin | 10.00 | 10.00 | 10.00 | 10.00 | 10.00 | 10.00 | 10.00 | 10.00 | 10.00 | 10.00 | 10.00 | 10.00 |
| 2-Pyrrolidone | 5.00 | 5.00 | 5.00 | 5.00 | 5.00 | 5.00 | 5.00 | 5.00 | 5.00 | 5.00 | 5.00 | 5.00 |
| Polyethylene glycol | 1.50 | 1.50 | 1.50 | 1.50 | 1.50 | 1.50 | 1.50 | 1.50 | 1.50 | 1.50 | 1.50 | 1.50 |
| Ethylene glycol | | | | | | | | | | | | |
| Triethylene glycol | | | | | | | | | | | | |
| Acetylenol E100 | 0.35 | 0.35 | 0.35 | 0.35 | 0.35 | 0.35 | 0.35 | 0.35 | 0.35 | 0.35 | 0.35 | 0.35 |
| Ion exchanged water | 73.23 | 63.35 | 73.49 | 63.09 | 69.85 | 68.09 | 70.65 | 67.45 | 69.05 | 69.05 | 69.05 | 69.05 |

[Table 2]

Table 2: Composition of ink

(unit: %)

| | Ink No. | | | | | | | | | | | |
|---|---|---|---|---|---|---|---|---|---|---|---|---|
| | 13 | 14 | 15 | 16 | 17 | 18 | 19 | 20 | 21 | 22 | 23 | 24 |
| C. I. Direct Blue 199 | 2.60 | 2.60 | 2.60 | 2.60 | 2.60 | 2.60 | 2.60 | 2.60 | 2.60 | 2.60 | 2.60 | 2.60 |
| C. I. Food Black 2 | 1.00 | 1.00 | 1.00 | 1.00 | 1.00 | 1.00 | 1.00 | 1.00 | 1.00 | 1.00 | 1.00 | 1.00 |
| C. I. Acid Blue 9 | | | | | | | | | | | | |
| C. I. Direct Black 195 | | | | | | | | | | | | |
| Pigment dispersion solution 1 | 6.50 | 6.50 | 6.50 | 6.50 | 6.50 | 6.50 | 6.50 | 6.50 | 6.50 | 6.50 | 6.50 | 6.50 |
| Pigment dispersion solution 2 | 4.00 | 4.00 | 4.00 | 4.00 | 4.00 | 4.00 | 4.00 | 4.00 | 4.00 | 4.00 | 4.00 | 4.00 |
| Pigment dispersion solution 3 | | | | | | | | | | | | |
| Pigment dispersion solution 4 | | | | | | | | | | | | |
| Piqment dispersion solution 5 | | | | | | | | | | | | |
| Pigment dispersion solution 6 | | | | | | | | | | | | |
| Pigment dispersion solution 7 | | | | | | | | | | | | |
| Glycerin | 10.00 | 10.00 | 10.00 | 10.00 | 10.00 | 10.00 | 10.00 | 10.00 | 10.00 | 10.00 | 10.00 | 10.00 |
| 2-Pyrrolidone | 5.00 | | | 5.00 | 2.31 | 6.92 | 2.23 | 7.00 | 3.25 | 5.40 | 3.20 | 5.50 |
| Polyethylene glycol | 1.50 | | 1.50 | | 0.69 | 2.08 | 0.67 | 2.10 | 3.25 | 1.10 | 3.30 | 1.00 |
| Ethylene glycol | | 5.00 | 5.00 | | | | | | | | | |
| Triethylene glycol | | 1.50 | | 1.50 | | | | | | | | |
| Acetylenol E100 | 0.35 | 0.35 | 0.35 | 0.35 | 0.35 | 0.35 | 0.35 | 0.35 | 0.35 | 0.35 | 0.35 | 0.35 |
| Ion exchanged water | 69.05 | 69.05 | 69.05 | 69.05 | 72.55 | 66.55 | 72.65 | 66.45 | 69.05 | 69.05 | 69.05 | 69.05 |

[Table 3]

Table 3: Composition of ink

(unit: %)

| | Ink No. | | | | | | | | | |
|---|---|---|---|---|---|---|---|---|---|---|
| | 25 | 26 | 27 | 28 | 29 | 30 | 31 | 32 | 33 | 34 |
| C. I. Direct Blue 199 | | 2.60 | 3.80 | 2.60 | | 2.60 | 2.60 | 2.60 | 2.60 | 2.60 |
| C. I. Food Black 2 | 1.00 | | 1.00 | 1.00 | 1.00 | | | 1.00 | 1.00 | 1.00 |
| C. I. Acid Blue 9 | | | | | 17.50 | | | | | |
| C. I. Direct Black 195 | | | | | | 8.50 | | | | |
| Pigment dispersion solution 1 | 19.50 | 6.50 | | 6.50 | 6.50 | 6.50 | 6.50 | | 6.50 | 6.50 |
| Pigment dispersion solution 2 | 4.00 | 4.00 | 4.00 | | 4.00 | 4.00 | 4.00 | 4.00 | | |
| Pigment dispersion solution 3 | | | | | | | 5.00 | | | |
| Pigment dispersion solution 4 | | | | | | | | 10.00 | | |
| Pigment dispersion solution 5 | | | | | | | | | | |
| Pigment dispersion solution 6 | | | | | | | | | 1.50 | |
| Pigment dispersion solution 7 | | | | | | | | | | 3.00 |
| Glycerin | 10.00 | 10.00 | 10.00 | 10.00 | 10.00 | 10.00 | 10.00 | 10.00 | 10.00 | 10.00 |
| 2-Pyrrolidone | 5.00 | 5.00 | 5.00 | 5.00 | 5.00 | 5.00 | 5.00 | 5.00 | 5.00 | 5.00 |
| Polyethylene glycol | 1.50 | 1.50 | 1.50 | 1.50 | 1.50 | 1.50 | 1.50 | 1.50 | 1.50 | 1.50 |
| Ethylene glycol | | | | | | | | | | |
| Triethylene glycol | | | | | | | | | | |
| Acetylenol E100 | 0.35 | 0.35 | 0.35 | 0.35 | 0.35 | 0.35 | 0.35 | 0.35 | 0.35 | 0.35 |
| Ion exchanged water | 58.65 | 70.05 | 74.25 | 73.05 | 54.15 | 61.55 | 65.05 | 65.55 | 71.55 | 70.05 |

(Ink 35)

Ink 35 was prepared according to the following procedures. The components described below were mixed and dispersed with a ball mill for 4 hours to prepare an ink. Ink 35 was prepared with reference to Example 3 of Patent Document 1.

· CROMO FINE BLACK (black pigment; manufactured by Dainichiseika Co., Ltd.): 16.00%
· IR820 (polymethine dye; manufactured by Nippon Kayaku Co., Ltd.): 0.02%
· Polyvinyl alcohol: 4.0%
· Ethyl alcohol: 16.00%
· Ion exchanged water: 63.98%

(Ink 36)

Ink 36 was prepared according to the following procedures. The components described below were mixed and sufficiently stirred to prepare a solution, and then the solution was filtered under pressure with a filter having a pore size

of 0.8 μm (trade name: HDCII; manufactured by Pall Corporation) to prepare an ink. Ink 36 was prepared with reference to Example 1 of Patent Document 2.

- · Sulfonated nigrosine dye (C. I. Solvent Black 7): 3.00%
- · Polyoxyethylene alkyl phenyl ether: 4.00%
- · Polyethylene glycol (average molecular weight 400): 10.0%
- · Ion exchanged water: 83.00%

(Ink 37)

Ink 37 was prepared according to the following procedures. The components described below were mixed and sufficiently stirred to prepare a solution. Then, the solution was adjusted to pH 10.5 with an aqueous lithium hydroxide solution. The resultant solution was filtered with a Teflon (trade name) filter having a pore size of 0.22 μm and further degassed for 30 minutes to prepare an ink. Ink 37 was prepared with reference to Example 1 of Patent Document 3.

- · C. I. Solubilized Sulfur Black 1 (dye, trade name: Kayaku Sulfur Black B; manufactured by Nippon Kayaku Co., Ltd.): 1.50%
- · Projet Fast Black 2: 2.50% (dye; manufactured by Fujifilm Imaging Colorant)
- · Glycerin: 2.50%
- · Diethylene glycol: 7.50%
- · Nonipol 400 (surfactant; manufactured by Sanyo Chemical Industries, Ltd.): 1.00%
- · Ion exchanged water: 85.00%

(Ink 38)

Ink 38 was prepared according to the following procedures. First, 4.0 parts of polyoxyethylene alkyl ether phosphate, 1.0 part of monoethanolamine, 5.0 parts of diethylene glycol, and 69.0 parts of ion exchanged water were mixed, and the mixture was heated to a temperature of 70°C in a water bath to prepare a solution of the components. To the resultant solution, 20.0 parts of C. I. Pigment Blue 15:3 (pigment; manufactured by Clariant) and 1.0 part of isopropyl alcohol were added, followed by pre-mixing for 30 minutes. Then, the mixture was dispersed for 3 hours with a sand grinder filled with glass beads of 1 mm in diameter at a filling rate of 50% (by volume). Further, coarse particles were removed by centrifugation at 12,000 rpm for 20 minutes to prepare pigment dispersion solution 8 having a pigment content of 20.0%.
The components described below were mixed and stirred for 1 hour to prepare an ink. Ink 38 was prepared with reference to Example 1 of Patent Document 4.

- · Pigment dispersion solution 8: 15.00%
- · C. I. Direct Blue 199 (dye, manufactured by Fujifilm Imaging Colorant): 2.00%
- · Glycerin: 15.00%
- · Diethylene glycol: 25.00%
- · Water: 43.00%

(Ink 39)

Ink 39 was prepared according to the following procedures: First, C. I. Pigment Blue 15:3. (pigment; manufactured by Ciba Geigy) was mixed with sulfolane, and the mixture was shear-dispersed at high speed with a high-speed mixer and then gently stirred. Then, sulfamic acid was added to the resultant dispersion. The mixture was heated to 60 to 200°C and then stirred for 10 hours to introduce sulfonic groups into pigment surfaces. Then, heating was performed to remove the solvent and residual sulfolane and sulfamic acid from the pigment slurry, and centrifugation and filtration were repeatedly performed. The resultant surface-treated pigment was diluted with water and adjusted to pH 9.0 with sodium hydroxide to prepare pigment dispersion solution 9 having a pigment content of 20.0%. Pigment dispersion solution 10 having a pigment content of 20.0% was prepared by the same method as described above except that C. I. Pigment Violet 23 (pigment; manufactured by Dainichiseika Co., Ltd.) was used in place of the pigment used for preparing pigment dispersion solution 9.
The components described below were mixed and sufficiently stirred to prepare an ink. Ink 39 was prepared with reference to Example 2 of Patent Document 5

- · Pigment dispersion solution 9: 22.50%

· Pigment dispersion solution 10: 1.50%
· Triethylene glycol monobutyl ether: 10.00%
· Dipropylene glycol: 5.00%
· Triethanolamine: 0.90%
· Surfynol 465 (manufactured by Air Products and Chemicals Inc.): 1.20%
· Proxel XL-2 (antiseptic agent; manufactured by Avecia): 0.05%
· Benzotriazole (anticorrosive agent): 0.02%
· EDTA (chelating agent): 0.04%
· Ion exchanged water: 58.79%

(Ink 40)

Ink 40 was prepared according to the following procedures. A flask provided with a stirrer, a reflux tube, a thermometer, and a dropping funnel was purged with nitrogen. In the flask, 20 g of styrene, 2 g of acrylic acid, and 10 g of butyl methacrylate were charged, and the mixture was heated to a temperature of 70°C. Further, a mixed solution of 10 g of styrene, 5 g of acrylic acid, 50 g of butyl methacrylate, and 1.5 g of azobisdimethyl valeronitrile was added dropwise to the flask over 3 hours to effect polymerization. In addition, a mixed solution of 8 g of azobisisovaleronitrile and 30 g of methyl ethyl ketone was added dropwise to the flask over 1 hour to accelerate the polymerization. After the reaction was completed, 200 g of methyl ethyl ketone was added to the flask to prepare a solution containing resin B. Then, 30 g of the resultant solution, 30 g of C. I. Pigment Blue 15:3 (pigment; manufactured by Clariant), and 50 g of a 0.1 mol/L aqueous sodium hydroxide solution were stirred with a homogenizer, and 500 g of ion exchanged water was further added to the mixture. The resultant dispersion was further stirred, and then part of methyl ethyl ketone and water were distilled off with an evaporator to prepare pigment dispersion solution 11 including the pigment dispersed in a state of being included in a polymer and having a pigment content of 20.0%, the solid content of the resin including the pigment being 6.7%. Pigment dispersion solution 12 having a pigment content of 20.0%, the solid content of the resin including the pigment being 6.7%, was prepared by the same method as described above except that C. I. Pigment Violet 23 (pigment; manufactured by Dainichiseika Co., Ltd.) was used in place of the pigment used for preparing pigment dispersion solution 11.
The components described below were mixed and sufficiently stirred to prepare an ink. Ink 40 was prepared with reference to Example 5 of Patent Document 5.

   • Pigment dispersion solution 11: 30.00%
   • Pigment dispersion solution 12: 2.25%
   • Glycerin: 14.00%
   • Dipropylene glycol monobutyl ether: 2.00%
   • Diethylene glycol monobutyl ether: 7.00%
   • Triethanolamine: 0.90%
   • BYK 348 (polysiloxane surfactant; manufactured by BYK Chemie Japan): 0.50%
   • Proxel XL-2 (antiseptic agent; manufactured by Avecia): 0.05%
   • Benzotriazole (anticorrosive agent): 0.02%
   • EDTA (chelating agent): 0.04%
   • Ion exchanged water: 43.24%

(Inks 41 to 45)

Inks 41 to 45 were prepared according to the following procedures. Inks 41 to 45 were prepared with reference to inks A, D, E, F, 1, and 2 of Patent Document 6.
Resin C and C. I. Pigment Blue 60 (pigment; manufactured by BASF) were mixed at a pigment/resin C ratio by mass of 4.0, the resultant mixture was ground with a two-roll mill, and an appropriate amount of water was added to the mixture. As the resin C, a block copolymer of benzyl methacrylate/methacrylic acid at a copolymerization ratio (ratio by mass) of 13/10, which was neutralized with potassium hydroxide, was used. As a result, pigment dispersion solution 13 having a pigment content of 15.0% and a resin content of 3.75% was prepared.
Resin D and C. I. Pigment Violet 23 (pigment; manufactured by Dainichiseika Co., Ltd.) were mixed at a pigment/resin D ratio by mass of 1.5, the resultant mixture was ground with a media mill, and an appropriate amount of water was added to the mixture. As the resin D, a graft copolymer of phenoxyethyl acrylate/ethoxy triethylene glycol methacrylate/methacrylic acid at a copolymerization ratio (ratio by mass) of 66-g-4/30, which was neutralized with potassium hydroxide, was used. As a result, pigment dispersion solution 14 having a pigment content of 15.0% and a resin content of 10.0% was prepared.

Resin C (the same as the above) and C. I. Pigment Blue 15:4 (pigment; manufactured by Clariant) were mixed at a pigment/resin C ratio by mass of 1.5, the resultant mixture was ground with a two-roll mill, and an appropriate amount of water was added to the mixture. As a result, pigment dispersion solution 15 having a pigment content of 15.0% and a resin content of 10.0% was prepared. In addition, pigment dispersion solution 16 having a pigment content of 15.0% and a resin content of 10.0% was prepared by the same method except that C. I. Pigment Red 122 (pigment; manufactured by Dainichiseika Co., Ltd.) was used in place of the pigment used for preparing pigment dispersion solution 15.

The components shown in Table 4 were mixed and sufficiently stirred to prepare inks 41 to 45. In addition, Surfynol 465 (HLB value: 13) was a nonionic surfactant manufactured by Air Products and Chemicals Inc.

[Table 4]

Table 4: Composition of ink

| | | | | | (unit: %) |
|---|---|---|---|---|---|
| | Ink No. | | | | |
| | 41 | 42 | 43 | 44 | 45 |
| Pigment dispersion solution 13 | 13.3 | | | | |
| Pigment dispersion solution 14 | | 26.7 | | | 10.00 |
| Pigment dispersion solution 15 | | | 26.7 | 10.00 | 6.67 |
| Pigment dispersion solution 16 | | | | 16.7 | |
| Glycerin | 10.00 | 10.00 | 10.00 | 10.00 | 10.00 |
| 1,2-Hexanediol | 4.00 | 4.00 | 4.00 | 4.00 | 4.00 |
| 2-Pyrrolidone | 3.00 | 3.00 | 3.00 | 3.00 | 3.00 |
| Ethylene glycol | 5.00 | 5.00 | 5.00 | 5.00 | 5.00 |
| Surfynol 465 | 0.20 | 0.20 | 0.20 | 0.20 | 0.20 |
| Ion exchanged water | 64.47 | 51.13 | 51.13 | 51.13 | 61.13 |

<Characteristics of ink>

The configurations of the inks prepared as described above are shown in Tables 5 to 8. The optical density of a cyan component was a value measured as follows. A solid image was recorded using an ink jet recording apparatus (trade name: PIXUS 850i; manufactured by Canon) at a recording duty of 50% (i.e., an in deposit of 28 ng per 600 dpi × 300 dpi). As a recording medium, a recording medium (trade name: Canon normal paper white, model number; SW-101; manufactured by Canon) was used. For the resulting solid image, the optical density of a cyan component was measured with a spectrophotometer (trade name; Spectrolino; manufactured by Gretag Macbeth) capable of measurement on the basis of the spectral sensitivity characteristic of ISO Status A under the conditions of a light source D50 and a viewing angle of 2°. In Tables 5 to 8, other dyes are dyes other than C. I. Direct Blue 199 and C. I. Food Black 2, and other pigments are pigments other than C. I. Pigment Blue 15:3 and C. I. Pigment Violet 23. Further, each of the abbreviations shown in the column "Characteristics of ink" represents the (total) content, the total of contents, or the ratio of the above-mentioned component.

[Table 5]

Table 5: Configuration of ink

| | | Example | | | | | | | | | | | | |
|---|---|---|---|---|---|---|---|---|---|---|---|---|---|---|
| | | 1 | 2 | 3 | 4 | 5 | 6 | 7* | 8* | 9 | 10 | 11 | 12 |
| Ink No. | | 1 | 2 | 3 | 4 | 5 | 6 | 7 | 8 | 9 | 10 | 11 | 12 |
| Content of main component [%] | C. I. Direct Blue 199 | 1.82 | 3.65 | 1.78 | 3.69 | 2.80 | 2.36 | 3.00 | 2.20 | 2.60 | 2.60 | 2.60 | 2.60 |
| | C. I. Food Black 2 | 0.70 | 1.40 | 0.68 | 1.42 | 1.00 | 1.00 | 1.00 | 1.00 | 1.00 | 1.00 | 1.00 | 1.00 |
| | Other dye | | | | | | | | | | | | |
| | C. I. Pigment Blue 15:3 | 0.92 | 1.83 | 0.89 | 1.85 | 1.10 | 1.54 | 0.90 | 1.70 | 1.53 | 0.94 | 1.60 | 0.90 |
| | C. I. Pigment Violet 23 | 0.56 | 1.12 | 0.55 | 1.14 | 0.80 | 0.80 | 0.80 | 0.80 | 0.57 | 1.16 | 0.50 | 1.20 |
| | Other pigment | | | | | | | | | | | | |
| | 2-Pyrrolidone | 5.00 | 5.00 | 5.00 | 5.00 | 5.00 | 5.00 | 5.00 | 5.00 | 5.00 | 5.00 | 5.00 | 5.00 |
| | Polyethylene glycol | 1.50 | 1.50 | 1.50 | 1.50 | 1.50 | 1.50 | 1.50 | 1.50 | 1.50 | 1.50 | 1.50 | 1.50 |
| Characteristic of ink | Optical density of cyan component | 1.05 | 1.13 | 1.04 | 1.13 | 1.11 | 1.08 | 1.12 | 1.04 | 1.10 | 1.10 | 1.10 | 1.03 |
| | $M_D$ [%] | 2.52 | 5.05 | 2.46 | 5.11 | 3.80 | 3.36 | 4.00 | 3.20 | 3.60 | 3.60 | 3.60 | 3.60 |
| | $M_P$ [%] | 1.48 | 2.95 | 1.44 | 2.99 | 1.90 | 2.34 | 1.70 | 2.50 | 2.10 | 2.10 | 2.10 | 2.10 |
| | $M_V$ [%] | 0.56 | 1.12 | 0.55 | 1.14 | 0.80 | 0.80 | 0.80 | 0.80 | 0.57 | 1.16 | 0.50 | 1.20 |
| | $M_C$ [%] | 4.00 | 8.00 | 3.90 | 8.10 | 5.70 | 5.70 | 5.70 | 5.70 | 5.70 | 5.70 | 5.70 | 5.70 |
| | $M_P/M_D$ [times] | 0.59 | 0.58 | 0.59 | 0.59 | 0.50 | 0.70 | 0.43 | 0.78 | 0.58 | 0.58 | 0.58 | 0.58 |
| | $M_V/M_C$ [times] | 0.14 | 0.14 | 0.14 | 0.14 | 0.14 | 0.14 | 0.14 | 0.14 | 0.10 | 0.20 | 0.09 | 0.21 |
| | $M_A+M_H$ [%] | 6.50 | 6.50 | 6.50 | 6.50 | 6.50 | 6.50 | 6.50 | 6.50 | 6.50 | 6.50 | 6.50 | 6.50 |
| | $M_A/M_B$ [times] | 3.33 | 3.33 | 3.33 | 3.33 | 3.33 | 3.33 | 3.33 | 3.33 | 3.33 | 3.33 | 3.33 | 3.33 |
| * outside the scope of claim 1 | | | | | | | | | | | | | |

[Table 6]

Table 6: Configuration of ink

| | | Example | | | | | | | | | | | |
|---|---|---|---|---|---|---|---|---|---|---|---|---|---|
| | | 13 | 14 | 15 | 16 | 17 | 18 | 19 | 20 | 21 | 22 | 23 | 24 |
| Ink No. | | 13 | 14 | 15 | 16 | 17 | 18 | 19 | 20 | 21 | 22 | 23 | 24 |
| Content of main component [%] | C. I. Direct Blue 199 | 2.60 | 2.60 | 2.60 | 2.60 | 2.60 | 2.60 | 2.60 | 2.60 | 2.60 | 2.60 | 2.60 | 2.60 |
| | C. I. Food Black 2 | 1.00 | 1.00 | 1.00 | 1.00 | 1.00 | 1.00 | 1.00 | 1.00 | 1.00 | 1.00 | 1.00 | 1.00 |
| | Other dye | | | | | | | | | | | | |
| | C. I. Pigment Blue 15:3 | 1.30 | 1.30 | 1.30 | 1.30 | 1.30 | 1.30 | 1.30 | 1.30 | 1.30 | 1.30 | 1.30 | 1.30 |
| | C. I. Pigment Violet 23 | 0.80 | 0.80 | 0.80 | 0.80 | 0.80 | 0.80 | 0.80 | 0.80 | 0.80 | 0.80 | 0.80 | 0.80 |
| | Other pigment | | | | | | | | | | | | |
| | 2-Pyrrolidone | 5.00 | | | 5.00 | 2.31 | 6.92 | 2.23 | 7.00 | 3.25 | 5.40 | 3.20 | 5.50 |
| | Polyethylene glycol | 1.50 | | 1.50 | | 0.69 | 2.08 | 0.67 | 2.10 | 3.25 | 1.10 | 3.30 | 1.00 |
| Characteristic of ink | Optical density of cyan component | 1.10 | 1.10 | 1.10 | 1.10 | 1.08 | 1.08 | 1.07 | 1.07 | 1.08 | 1.08 | 1.07 | 1.07 |
| | $M_D$ [%] | 3.60 | 3.60 | 3.60 | 3.60 | 3.60 | 3.60 | 3.60 | 3.60 | 3.60 | 3.60 | 3.60 | 3.60 |
| | $M_P$ [%] | 2.10 | 2.10 | 2.10 | 2.10 | 2.10 | 2.10 | 2.10 | 2.10 | 2.10 | 2.10 | 2.10 | 2.10 |
| | $M_V$ [%] | 0.80 | 0.80 | 0.80 | 0.80 | 0.80 | 0.80 | 0.80 | 0.80 | 0.80 | 0.80 | 0.80 | 0.80 |
| | $M_C$ [%] | 5.70 | 5.70 | 5.70 | 5.70 | 5.70 | 5.70 | 5.70 | 5.70 | 5.70 | 5.70 | 5.70 | 5.70 |
| | $M_P/M_D$ [times] | 0.58 | 0.58 | 0.58 | 0.58 | 0.58 | 0.58 | 0.58 | 0.58 | 0.58 | 0.58 | 0.58 | 0.58 |
| | $M_V/M_C$ [times] | 0.14 | 0.14 | 0.14 | 0.14 | 0.14 | 0.14 | 0.14 | 0.14 | 0.14 | 0.14 | 0.14 | 0.14 |
| | $M_A+M_B$ [%] | 6.50 | 0.00 | 1.50 | 5.00 | 3.00 | 9.00 | 2.90 | 9.10 | 6.50 | 6.50 | 6.50 | 6.50 |
| | $M_A/M_B$ [times] | 3.33 | - | 0.00 | - | 3.35 | 3.33 | 3.33 | 3.33 | 1.00 | 4.91 | 0.97 | 5.50 |

[Table 7]

Table 7: Configuration of ink

| | | Comparative Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Ink No. | | 25 | 26 | 27 | 28 | 29 | 30 | 31 | 32 | 33 | 34 | 35 |
| Content of main component [%] | C. I. Direct Blue 199 | | 2.60 | 3.90 | 2.60 | | 2.60 | 2.60 | 2.60 | 2.60 | 2.60 | |
| | C. Food Black 2 | 1.00 | | 1.00 | 1.00 | 1.00 | 1.70 | | 1.00 | 1.00 | 1.00 | |
| | Other dye | | | | | 3.50 | | | | | 0.02 | 0.02 |
| | C. I. Pigment Blue 15:3 | 3.90 | 1.30 | | 1.30 | 1.30 | 1.30 | 1.30 | | 1.30 | 1.30 | |
| | C. I. Pigment Violet 23 | 0.80 | 0.80 | 0.80 | | 0.80 | 0.80 | 0.80 | 0.80 | | | |
| | Other pigment | | | | | | | 1.00 | 2.00 | 0.30 | 0.60 | 16.00 |
| | 2-Pyrrolidone | 5.00 | 5.00 | 5.00 | 5.00 | 5.00 | 5.00 | 5.00 | 5.00 | 5.00 | 5.00 | |
| | Polyethylene glycol | 1.50 | 1.50 | 1.50 | 1.50 | 1.50 | 1.50 | 1.50 | 1.50 | 1.50 | 1.50 | |
| Characteristic of ink | Optical density of cyan component | 0.97 | 0.88 | 0.99 | 0.89 | 1.05 | 1.05 | 0.92 | 1.03 | 0.93 | 0.90 | 0.71 |
| | $M_D$ [%] | 1.00 | 2.60 | 4.90 | 3.60 | 4.50 | 4.30 | 2.60 | 3.60 | 3.60 | 3.60 | 0.02 |
| | $M_P$ [%] | 4.70 | 2.10 | 0.80 | 1.30 | 2.10 | 2.10 | 3.10 | 2.80 | 1.60 | 1.90 | 16.00 |
| | $M_V$ [%] | 0.80 | 0.80 | 0.80 | 0.00 | 0.80 | 0.80 | 0.80 | 0.80 | 0.00 | 0.00 | 0.00 |
| | $M_C$ [%] | 5.70 | 4.70 | 5.70 | 4.90 | 6.60 | 6.40 | 5.70 | 6.40 | 5.20 | 5.50 | 16.02 |
| | $M_P/M_D$ [times] | 4.70 | 0.81 | 0.16 | 0.36 | 0.47 | 0.49 | 1.19 | 0.78 | 0.44 | 0.53 | 8.00 |
| | $M_V/M_C$ [times] | 0.14 | 0.17 | 0.14 | 0.00 | 0.12 | 0.13 | 0.14 | 0.13 | 0.00 | 0.00 | 0.00 |
| | $M_A+M_B$ [%] | 6.50 | 6.50 | 6.50 | 6.50 | 6.50 | 6.50 | 6.50 | 6.50 | 6.50 | 6.50 | 0.00 |
| | $M_A/M_B$ [times] | 3.33 | 3.33 | 3.33 | 3.33 | 3.33 | 3.33 | 3.33 | 3.33 | 3.33 | 3.33 | - |

[Table 8]

Table 8: Configuration of ink

| | | Comparative Example | | | | | | | | | |
|---|---|---|---|---|---|---|---|---|---|---|---|
| | | 12 | 13 | 14 | 15 | 16 | 17 | 18 | 19 | 20 | 21 |
| Ink No. | | 36 | 37 | 38 | 39 | 40 | 41 | 42 | 43 | 44 | 45 |
| Content of main component [%] | C. I. Direct Blue 199 | | | | | | | | | | |
| | C. I. Food Black 2 | | | 2.00 | | | | | | | |
| | Other dye | 3.00 | 4.00 | | | | | | | | |
| | C. I. Pigment Blue 15:3 | | | 3.00 | 4.50 | 6.00 | | | | | |
| | C. I. Pigment Violet 23 | | | | 0.30 | 0.45 | | 4.00 | | | 1.50 |
| | Other pigment | | | | | | 2.00 | 0.00 | 4.00 | 4.00 | 1.00 |
| | 2-pyrrolidone | | | | | | 3.00 | 3.00 | 3.00 | 3.00 | 3.00 |
| | Polyethylene glycol. | | | | | | | | | | |
| Characteristic of ink | Optical density of cyan component | 0.69 | 0.82 | 0.77 | 0.76 | 0.81 | 0.66 | 0.73 | 0.72 | 0.65 | 0.68 |
| | $M_D$ [%] | 3.00 | 4.00 | 2.00 | 0.00 | 0.00 | 0.00 | 0.00 | 0.00 | 0.00 | 0.00 |
| | $M_P$ [%] | 0.00 | 0.00 | 3.00 | 4.80 | 6.45 | 2.00 | 4.00 | 4.00 | 4.00 | 2.50 |
| | $M_V$ [%] | 0.00 | 0.00 | 0.00 | 0.30 | 0.45 | 0.00 | 4.00 | 0.00 | 0.00 | 1.50 |
| | $M_C$ [%] | 3.00 | 4.00 | 5.00 | 4.80. | 6.45 | 2.00 | 4.00 | 4.00 | 4.00 | 2.50 |
| | $M_P/M_D$ [times] | 0.00 | 0.00 | 1.50 | - | - | - | - | - | - | - |
| | $M_V/M_C$ [times] | 0.00 | 0.00 | 0.00 | 0.06 | 0.07 | 0.00 | 1.00 | 0.00 | 0.00 | 0.60 |
| | $M_A+M_B$ [%] | 0.00 | 0.00 | 0.00 | 0.00 | 0.00 | 3.00 | 3.00 | 3.00 | 3.00 | 3.00 |
| | $M_A/M_B$ [times] | - | - | - | - | - | - | - | - | - | - |

<Evaluation of ink>

Each of the above-described resultant inks was evaluated as described below. In evaluation of the ink of the present invention, evaluation criteria A, B, and C of each of the evaluation items are a particularly excellent level, a satisfactory level, and an unacceptable level, respectively.

(Preservation stability)

Each of the above-described inks was placed in a Teflon (trade name) vessel and stored at a temperature of 60°C for 2 months. The particle diameter ($d_{50}$) of the pigment in the ink was measured before and after storage using a particle size distribution measurement apparatus (trade name: Nanotrac UPA 150EX; manufactured by Nikkiso Co., Ltd.) to evaluate preservation stability. The evaluation criteria for preservation stability were as described below. The evaluation results are shown in Table 9. Since inks 36 and 37 contained no pigment, preservation stability was not evaluated.

A: The particle diameter of the pigment after storage was less than 1.05 times that before storage.
B: The particle diameter of the pigment after storage was 1.05 times or more to less than 1.10 times that before storage.

C: The particle diameter of the pigment after storage was 1.10 times or more that before storage.

An image used for evaluating visibility, readability, and water resistance was formed as follows. An ink cartridge filled with each of the resulting inks was set in an ink jet recording apparatus (having the configuration shown in Fig. 1) provided with a recording head (having the configuration shown in Fig. 2) which ejected the ink by the action of thermal energy. The recording conditions were set to a resolution of 600 dpi × 300 dpi, an ejection frequency of 15 kHz, an ejection amount of 28 ng per dot, and one-pass recording. As a recording medium, a commercially available white woven envelope (ISO whiteness degree 83%, Stökigt sizing degree: 12 seconds, manufactured by Georgia-Pacific Co.,) to which normal paper (trade name: Canon normal paper white, model number; SW-101; manufactured by Canon Inc.) was applied was used.

(Visibility)

The ink was applied in an amount of 28 ng to each pixel to record a solid image on the recording medium so that the amount of the ink applied was 5.0 mg per square inch using the ink jet recording apparatus. The resultant image was allowed to stand for 24 hours after recording, and then the hue angle (H°) of the image was measured to evaluate visibility. The measurement was performed using a spectrophotometer (trade name; Spectrolino; manufactured by Gretag Macbeth) under the condition in which observation light source: D50, observation viewing angle: 2 degrees, density: ANSI. A, white standard: Abs, filter: No. The evaluation criteria for visibility were as follows. The evaluation results are shown in Table 9.

A: The hue angle (H°) was 260° or more to 270° or less.
B: The hue angle (H°) was 250° or more to less than 260° or more than 270° to 280° or less.
C: The hue angle (H°) was less than 250° or more than 280°

(Readability)

A two-dimensional bar code (Data Matrix ECC 2000) of 2 cm × 2 cm was recorded on 100 sheets using the above-described ink jet recording apparatus. The resultant two-dimensional bar codes were read with Integra 9500 (manufactured by Integra Co.,). The reading conditions were based on the DHL Deutsche post standard (Code 25 interleaved). The readability was evaluated from an average of the measured symbol contrast values of 100 sheets. The evaluation criteria for readability were as follows. The evaluation results are shown in Table 9.

A: The average symbol contrast value was 70 or more.
B: The average symbol contrast value was 63 or more to less than 70.
C: The average symbol contrast value was less than 63.

(Water resistance)

The ink was applied in an amount of 28 ng to each pixel to record a solid image of 1 cm × 2 cm on two recording media so that the amount of the ink applied was 5.0 mg per square inch using the ink jet recording apparatus. In one of the records, the optical density of a cyan component was measured in each of a recorded portion and an unrecorded portion, and the measured optical densities were regarded as a recorded portion OD value and an unrecorded portion OD value of a reference example. The other record was allowed to stand for 1 hour after recording, and then a 2 × 2 cm square solid image portion including an unrecorded portion was cut out. The test piece was placed in pure water, allowed to stand for 5 minutes, and then taken out from the pure water, and drained and dried by allowing to stand for 24 hours. Then, the optical density of a cyan component was measured in each of a recorded portion and an unrecorded portion of the test piece, and the measured optical densities were regarded as a recorded portion OD value and an unrecorded portion OD value of a test object. The optical density of a cyan component was measured with a spectrophotometer (trade name; Spectrolino; manufactured by Gretag Macbeth) capable of measurement on the basis of the spectral sensitivity characteristic of ISO Status A under the conditions of a light source D50 and a viewing angle of 2°. A residual ratio of the optical density was determined from the obtained values on the basis of the equation below to evaluate water resistance. The evaluation criteria for water resistance were as follows. The evaluation results are shown in Table 9.

[Equation 2]

Residual ratio of optical density = [(Recorded portion OD value of test object) - (Unrecorded portion OD value of test object)]/[(Recorded portion OD value of reference example) - (Unrecorded portion OD value of reference example)] × 100 [%]

A: The residual ratio of the optical density was 70% or more.
B: The residual ratio of the optical density was 60% or more to less than 70%.
C: The residual ratio of the optical density was less than 60%.

(Ejection stability)

An ink cartridge filled with each of the resulting inks was set at a cyan ink position in a modified model of an ink jet recording apparatus (trade name: PIXUS 850i; manufactured by Canon Inc.) provided with a recording head which ejected the ink by the action of thermal energy. The recording conditions included a resolution of 600 dpi × 300 dpi, an ejection frequency of 15 kHz, an ejection amount of 28 ng per dot, and one-pass recording. An image of 18 cm × 24 cm was recorded in a default mode on three recording media (trade name: Office Planner; manufactured by Canon Inc.) at a recording duty of 50%. In this recording, the surface of the recording head was cleaned with a wiper blade of PIXUS 850i once at each time of recording one sheet. Then, a nozzle check pattern of PIXUS 850i was further recorded on one recording medium. The resulting four nozzle check patterns were visually observed to evaluate ejection stability. The evaluation criteria for ejection stability were as follows. The evaluation results are shown in Table 9.

A: The nozzle check patter was not disturbed.
B: The nozzle check patter was slightly disturbed but had no ejection failure.
C: The nozzle check patter had ejection failure and clear disturbance.

[Table 9]

Table 9: Evaluation results

| | | Ink No. | Preservation stability | Visibility | Readability | Water resistance | Ejection stability |
|---|---|---|---|---|---|---|---|
| Example | 1 | 1 | A | A | A | A | A |
| | 2 | 2 | A | A | A | A | A |
| | 3 | 3 | A | A | B | A | A |
| | 4 | 4 | B | A | A | A | A |
| | 5 | 5 | A | A | A | A | A |
| | 6 | 6 | A | A | A | A | A |
| | 7* | 7 | A | A | A | B | A |
| | 8* | 8 | A | A | B | A | A |
| | 9 | 9 | A | A | A | A | A |
| | 10 | 10 | A | A | A | A | A |
| | 11 | 11 | A | B | A | A | A |
| | 12 | 12 | A | A | B | A | A |
| | 13 | 13 | A | A | A | A | A |
| | 14 | 14 | A | A | A | A | B |
| | 15 | 15 | B | A | A | A | A |
| | 16 | 16 | B | A | A | A | A |
| | 17 | 17 | A | A | A | A | A |
| | 18 | 18 | A | A | A | A | A |
| | 19 | 19 | A | A | A | A | B |
| | 20 | 20 | A | A | A | A | B |
| | 21 | 21 | A | A | A | A | A |
| | 22 | 22 | A | A | A | A | A |
| | 23 | 23 | A | A | A | A | B |
| | 24 | 24 | A | A | A | A | B |

(continued)

| | | Ink No. | Preservation stability | Visibility | Readability | Water resistance | Ejection stability |
|---|---|---|---|---|---|---|---|
| | 1 | 25 | C | A | B | A | A |
| | 2 | 26 | A | A | C | A | A |
| | 3 | 27 | A | A | B | C | A |
| | 4 | 28 | A | C | C | C | A |
| | 5 | 29 | C | A | A | C | A |
| | 6 | 30 | B | A | A | C | A |
| | 7 | 31 | B | A | C | A | A |
| | 8 | 32 | C | A | B | A | A |
| | 9 | 33 | A | A | C | C | A |
| | 10 | 34 | A | A | C | A | A |
| Comp. Example | 11 | 35 | B | C | C | A | B |
| | 12 | 36 | - | C | C | C | B |
| | 13 | 37 | - | C | C | C | B |
| | 14 | 38 | B | B | C | A | B |
| | 15 | 39 | B | C | C | A | B |
| | 16 | 40 | C | C | C | A | B |
| | 17 | 41 | B | C | C | A | A |
| | 18 | 42 | B | C | C | A | A |
| | 19 | 43 | B | C | C | A | A |
| | 20 | 44 | B | C | C | A | A |
| | 21 | 45 | B | B | C | A | A |

**\* outside the scope of claim 1**

<Evaluation of recording condition>

An ink cartridge filled with each of the inks shown in Table 10 was set in an ink jet recording apparatus (having the configuration shown in Fig. 1) provided with a recording head (having the configuration shown in Fig. 2.) which ejected the ink by the action of thermal energy. The recording conditions (resolution, amount of ink ejected, ejection frequency, and number of recording scans) were set as shown in Table 10, and images were recorded. As a recording medium, a commercially available white woven envelope (ISO whiteness degree 83%, Stökigt sizing degree: 12 seconds, manufactured by Georgia-Pacific Co.,) to which normal paper (trade name: Canon normal paper white, model number; SW-101; manufactured by Canon Inc.) was applied was used. An image was recorded on the normal paper portion of the envelope. In evaluation of the recording conditions of the present invention, evaluation criteria A, B, and C of each of the evaluation items were a particularly excellent level, a satisfactory level, and an unacceptable level, respectively.

(Definition)

A two-dimensional bar code (Data Matrix ECC 2000) of 2 cm $\times$ 2 cm was recorded on 100 sheets using the above-described ink jet recording apparatus. The resultant two-dimensional bar codes were read with Integra 9500 (manufactured by Integra Co.,). The reading conditions were based on the DHL Deutsche post standard (Code 25 interleaved). The definition was evaluated from a minimum value of the measured symbol contrast values of 100 sheets. The evaluation criteria for definition were as follows. The evaluation results are shown in Table 10.

A: The minimum symbol contrast value was 70 or more.
B: The minimum symbol contrast value was 63 or more to less than 70.

C: The minimum symbol contrast value was less than 63.

(Image quality)

A two-dimensional bar code (Data Matrix ECC 2000) of 2 cm × 2 cm was recorded on 100 sheets using the above-described ink jet recording apparatus. The resultant two-dimensional bar codes were read with Integra 9500 (manufactured by Integra Co.,). The reading conditions were based on the DHL Deutsche post standard (Code 25 interleaved). The measured modulation value which was largest in number was regarded as the modulation value of the two-dimensional bar codes to evaluate the image quality. The evaluation criteria for image quality were as follows. The evaluation results are shown in Table 10.

A: The modulation value was A.
B: The modulation value was B.
C: The modulation value was C or D.

(Recording speed)

A Deutsche post-type indicia pattern of 4 cm × 2 cm was continuously recorded using the above-described ink jet recording apparatus, and the number of records per minute was measured to evaluate the recording speed. The evaluation criteria for the recording speed were as follows. The evaluation results are shown in Table 10.

A: 280 or more records per minute
B: Less than 280 records per minute

(Recording durability)

A Deutsche post-type indicia pattern of 4 cm × 2 cm was recorded on 50,000 sheets using the above-described ink jet recording apparatus, and then a nozzle check pattern was recorded. The resultant nozzle check patter was visually observed to evaluate recording durability. The evaluation criteria for the recording durability were as follows. The evaluation results are shown in Table 10.

A: Neither ejection failure nor recording deflection
B: Slight ejection failure and recording reflection
C: Much ejection failure and recording reflection

[Table 10]

Table 10: Recording conditions and evaluation results

| | | Ink No. | Recording conditions | | | | Evaluation results | | | |
|---|---|---|---|---|---|---|---|---|---|---|
| | | | Resolution [dpi×dpi] | Amount of ink ejected [ng] | Ejection frequency [kHz] | Number of recording scans | Definition | Image quality | Recording speed | Recording durability |
| Example | 25 | 15 | 150×150 | 28 | 15 | 1 | B | B | A | A |
| | 26 | 15 | 300×300 | 28 | 15 | 1 | A | A | A | A |
| | 27 | 15 | 600×300 | 28 | 15 | 1 | A | A | A | A |
| | 28 | 15 | 600×600 | 28 | 15 | 1 | A | A | A | A |
| | 29 | 15 | 900×900 | 28 | 15 | 1 | A | A | B | B |
| | 30 | 15 | 600×300 | 14 | 15 | 1 | B | B | A | A |
| | 31 | 15 | 600×300 | 15 | 15 | 1 | A | B | A | A |
| | 32 | 15 | 600×300 | 19 | 15 | 1 | A | B | A | A |
| | 33 | 15 | 600×300 | 20 | 15 | 1 | A | A | A | A |
| | 34 | 15 | 600×300 | 34 | 15 | 1 | A | A | A | A |
| | 35 | 15 | 600×300 | 35 | 15 | 1 | A | B | A | A |
| | 36 | 15 | 600×300 | 40 | 15 | 1 | A | B | A | A |
| | 37 | 15 | 600×300 | 41 | 15 | 1 | A | B | A | B |
| | 38 | 15 | 600×300 | 28 | 9 | 1 | A | A | B | A |
| | 39 | 15 | 600×300 | 28 | 10 | 1 | A | A | A | A |
| | 40 | 15 | 600×300 | 28 | 40 | 1 | A | A | A | A |
| | 41 | 15 | 600×300 | 28 | 41 | 1 | A | B | A | B |
| | 42 | 15 | 600×300 | 28 | 40 | 2 | A | A | B | A |
| Comp. Example | 22 | 23 | 600×300 | 28 | 15 | 1 | C | B | A | A |
| | 23 | 24 | 600×300 | 28 | 15 | 1 | B | B | A | A |
| | 24 | 25 | 600×300 | 28 | 15 | 1 | C | B | A | A |
| | 25 | 26 | 600×300 | 28 | 15 | 1 | B | B | A | A |

EP 2 410 026 B1

31

Reference Numerals

100     supply unit
102     side surface
103     CR rail
104     CR shaft
105     driving motor
106     frame
107     control substrate
200     carriage
300     recovery unit
500     main cartridge
50      recording head

**Claims**

1.   A blue ink comprising a dye and a pigment as colorants,
     wherein at least C. I. Direct Blue 199 and C. I. Food Black 2 are contained as the dye, and at least C. I. Pigment Blue 15:3 and C. I. Pigment Violet 23 are contained as the pigment,
     wherein the content $M_P$ (% by mass) of the pigment in the blue ink is 0.50 times or more to 0.70 times or less the content $M_D$ (% by mass) of the dye.

2.   The blue ink according to Claim 1, wherein the total content $M_C$ (% by mass) of the colorants in the blue ink is 4.00% by mass or more to 8.00% by mass or less.

3.   The blue ink according to Claim 1 or 2, wherein the content $M_V$ (% by mass) of the C.I. Pigment Violet 23 in the blue ink is 0.10 times or more to 0.20 times or less the total content $M_C$ (% by mass) of the colorants.

4.   The blue ink according to any one of Claims 1 to 3, further comprising 2-pyrrolidone and polyethylene glycol having an average molecular weight of 1,000 as water-soluble organic solvents.

5.   The blue ink according to Claim 4, wherein the total of the content $M_A$ (% by mass) of 2-pyrrolidone and the content $M_B$ (% by mass) of polyethylene glycol having an average molecular weight of 1,000 in the blue ink is 3.00% by mass or more to 9.00% by mass or less.

6.   The blue ink according to Claim 4 or 5, wherein the content $M_A$ (% by mass) of 2-pyrrolidone in the blue ink is 1.00 time or more to 5.00 times or less the content $M_B$ (% by mass) of polyethylene glycol having an average molecular weight of 1,000.

7.   An ink jet recording method comprising a step of ejecting an ink by an ink jet method to perform recording on a recording medium, wherein the ink is the blue ink according to any one of Claims 1 to 6.

8.   The ink jet recording method according to Claim 7, wherein the ink jet method is a method for ejecting the ink by the action of thermal energy.

9.   A recording head comprising an ink storage unit for storing an ink, and a recording unit for ejecting the ink, wherein the ink is the blue ink according to any one of Claims 1 to 6.

10.  An ink jet recording apparatus comprising a recording head including an ink storage unit for storing an ink and a recording unit for ejecting the ink, wherein the ink is the blue ink according to any one of Claims 1 to 6.

**Patentansprüche**

1.   Blaue Tinte, die einen Farbstoff und ein Pigment als Farbmittel enthält,

wobei zumindest C. I. Direct Blue 199 und C. I. Food Black 2 als der Farbstoff enthalten sind, und zumindest C. I. Pigment Blue 15:3 und C. I. Pigment Violet 23 als das Pigment enthalten sind,

wobei der Gehalt $M_P$ (Masse-%) des Pigments in der blauen Tinte das 0,50-fache oder mehr bis das 0,70-fache oder weniger des Gehalts $M_D$ (Masse-%) des Farbstoffs in der Tinte ist.

2. Blaue Tinte nach Anspruch 1, wobei der Gesamtgehalt $M_C$ (Masse-%) der Farbmittel in der blauen Tinte 4,00 Masse-% oder mehr bis 8,00 Masse-% oder weniger beträgt.

3. Blaue Tinte nach Anspruch 1 oder 2, wobei der Gehalt $M_V$ (Masse-%) des C. I. Pigment Violet 23 in der blauen Tinte das 0,10-fache oder mehr bis das 0,20-fache oder weniger des Gesamtgehalts $M_C$ (Masse-%) der Farbmittel beträgt.

4. Blaue Tinte nach einem der Ansprüche 1 bis 3, die ferner 2-Pyrrolidon und Polyethylenglykol mit einem durchschnittlichen Molekulargewicht von 1.000 als wasserlösliche organische Lösungsmittel umfasst.

5. Blaue Tinte nach Anspruch 4, wobei das Gesamte des Gehalts $M_A$ (Masse-%) an 2-Pyrrolidon und des Gehalts $M_B$ (Masse-%) an Polyethylenglykol mit einem durchschnittlichen Molekulargewicht von 1.000 in der blauen Tinte 3,00 Masse-% oder mehr bis 9,00 Masse-% oder weniger beträgt.

6. Blaue Tinte nach Anspruch 4 oder 5, wobei der Gehalt $M_A$ (Masse-%) an 2-Pyrrolidon in der blauen Tinte das 1,00-fache oder mehr bis das 5,00-fache oder weniger des Gehalts $M_B$ (Masse-%) an Polyethylenglykol mit einem durchschnittlichen Molekulargewicht von 1.000 ist.

7. Tintenstrahlaufzeichnungsverfahren, das den Schritt des Ausstoßens einer Tinte durch ein Tintenstrahlverfahren zum Durchführen einer Aufzeichnung auf ein Aufzeichnungsmedium umfasst, wobei die Tinte die blaue Tinte nach einem der Ansprüche 1 bis 6 ist.

8. Tintenstrahlaufzeichnungsverfahren nach Anspruch 7, wobei das Tintenstrahlverfahren ein Verfahren zum Ausstoßen der Tinte mittels thermischer Energie ist.

9. Aufzeichnungskopf, der eine Tintenspeichereinheit zum Speichern einer Tinte und eine Aufzeichnungseinheit zum Ausstoßen der Tinte umfasst, wobei die Tinte die blaue Tinte nach einem der Ansprüche 1 bis 6 ist.

10. Tintenstrahlaufzeichnungsapparat, der einen Aufzeichnungskopf umfasst, der eine Tintenspeichereinheit zum Speichern einer Tinte und eine Aufzeichnungseinheit zum Ausstoßen der Tinte beinhaltet, wobei die Tinte die blaue Tinte nach einem der Ansprüche 1 bis 6 ist.

**Revendications**

1. Encre bleue comprenant un colorant et un pigment comme matières colorantes,
dans laquelle au moins le colorant bleu C. I. Direct Blue 199 et le colorant noir C. I. Food Black 2 sont présents comme colorants, et au moins le pigment bleu C. I. Pigment Blue 15:3 et le pigment violet C. I. Pigment Violet 23 sont présents comme pigments,
dans laquelle la quantité $M_P$ (% en masse) du pigment dans l'encre va de 0,50 fois ou plus à 0,70 fois ou moins la quantité $M_D$ (% en masse) du colorant.

2. Encre bleue suivant la revendication 1, dans laquelle la quantité totale $M_C$ (% en masse) des matières colorantes dans l'encre bleue va de 4,00 % en masse ou plus à 8,00 % en masse ou moins.

3. Encre bleue suivant la revendication 1 ou 2, dans laquelle la quantité $M_V$ (% en masse) du pigment violet C. I. Pigment Violet 23 dans l'encre bleue va de 0,10 fois ou plus à 0,20 fois ou moins de la quantité totale $M_C$ (% en masse) des matières colorantes.

4. Encre bleue suivant l'une quelconque des revendications 1 à 3, comprenant en outre de la 2-pyrrolidone et un polyéthylèneglycol ayant un poids moléculaire moyen de 1000 comme solvants organiques hydrosolubles.

5. Encre bleue suivant la revendication 4, dans laquelle le total de la quantité $M_A$ (% en masse) de 2-pyrrolidone et de la quantité $M_B$ (% en masse) de polyéthylèneglycol ayant un poids moléculaire moyen de 1000 dans l'encre bleue va de 3,00 % en masse ou plus à 9,00 % en masse ou moins.

6. Encre bleue suivant la revendication 4 ou 5, dans laquelle la quantité $M_A$ (% en masse) de 2-pyrrolidone dans l'encre bleue va de 1,00 fois ou plus à 5,00 fois ou moins la quantité $M_B$ (en masse) de polyéthylèneglycol ayant un poids moléculaire moyen de 1000.

7. Procédé d'enregistrement par jet d'encre comprenant une étape d'éjection d'une encre par un procédé à jet d'encre pour effectuer un enregistrement sur un support d'enregistrement, dans lequel l'encre est l'encre bleue suivant l'une quelconque des revendications 1 à 6.

8. Procédé d'enregistrement par jet d'encre suivant la revendication 7, dans lequel le procédé à jet d'encre est un procédé pour éjecter l'encre sous l'action d'énergie thermique.

9. Tête d'enregistrement comprenant une unité de stockage d'encre pour stocker une encre, et une unité d'enregistrement pour éjecter l'encre, dans laquelle l'encre est l'encre bleue suivant l'une quelconque des revendications 1 à 6.

10. Appareil d'enregistrement par jet d'encre comprenant une tête d'enregistrement renfermant une unité de stockage d'encre pour stocker une encre et une unité d'enregistrement pour éjecter l'encre, dans lequel l'encre est l'encre bleue suivant l'une quelconque des revendications 1 à 6.

# FIG. 1

# FIG. 2

# FIG. 3

# FIG. 4

# FIG. 5

# FIG. 6

# FIG. 7

608

607

605

604

52a

610

606

603

604

605

52

# FIG. 8

# FIG. 9

**EP 2 410 026 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8183952 A
- JP 9059551 A
- JP 10046085 A
- JP 8218020 A
- JP 2003313480 A
- JP 2008504400 PCT